# EUROPEAN PATENT APPLICATION

(11) **EP 1 061 520 A2**
(43) Date of publication of application: **20.12.2000**
(21) Application number: 00112601.0
(22) Date of filing: 14.06.2000
(51) Int. Cl.: G11B 27/036, G11B 27/34, G11B 27/034

(54) **Editing system, editing apparatus and editing method**

(30) Priority: 14.06.1999 JP 16732799
(71) Applicant: SONY CORPORATION, Tokyo (JP)
(72) Inventor: Yuji, Ogihara, Shinagawa-ku, Tokyo (JP); Hiroshi, Yamaguchi, Shinagawa-ku, Tokyo (JP); Shoko, Hiroyasu, Shinagawa-ku, Tokyo (JP); Hiraku, Inoue, Shinagawa-ku, Tokyo (JP)
(74) Representative: Melzer, Wolfgang, Dipl.-Ing.

(57) **Abstract**

An editing apparatus, an editing system and an editing method for collectively erasing a plurality of stored programs. The editing apparatus such as a personal computer is connected through a suitable interface to a recording and reproducing apparatus which houses a storage medium having programs stored thereon. The editing apparatus is operated to select programs desired to be erased collectively from the storage medium, and the recording and reproducing apparatus collectively erases the selected programs accordingly.

## Description

### BACKGROUND OF THE INVENTION

The present invention relates to an editing system, an editing apparatus and an editing method for allowing a plurality of programs stored on a recording and reproducing apparatus to be erased collectively, the editing apparatus such as a personal computer and the recording and reproducing apparatus being interconnected via a suitable interface to make up the editing system.

As equipment for recording and reproducing music and other audio data, there exist recording and reproducing apparatuses that utilize as their storage medium a magneto-optical disc which digitally records audio signals. One such type of recording and reproducing apparatus is a mini-disc (MD; registered trademark) recording and reproducing apparatus compatible with magneto-optical discs.

Illustratively, a mini-disc holds management information called user-TOC (called the U-TOC hereunder) apart from main data such as pieces of music. The U-TOC is used to manage recorded areas in which a user has recorded data, and free or unrecorded areas capable of storing data. A recording part of the apparatus identifies areas to which to record data by referring to the U-TOC, and a reproducing part of the apparatus recognizes areas from which to reproduce data by referencing the U-TOC.

Specifically, recorded pieces of music or other audio data are managed in data units called tracks whose start and end addresses are stored in the U-TOC. Free areas where no data are recorded are managed as data-recordable areas whose start and end addresses are accommodated in the U-TOC.

Since the disc areas are thus managed by use of the U-TOC, simply updating the U-TOC permits easy and rapid execution of such editing processes as divide, combine, move (track number modification), and erase operations on tracks that are handled as units of recorded data.

The U-TOC also has an area that holds character information made up of a disc title (disc name) and program names (track names) attached to programs such as recorded pieces of music. The user may enter such a disc name and track names in doing edit work.

In the description that follows, "programs" signify units of audio data such as pieces of music recorded as main data on the disc. Illustratively, one program represents audio data constituting a single piece of music. The word "track" is used in an interchangeable manner with the word "program."

One of the editing functions of the mini-disc recording and reproducing apparatus is track erasure. A track erase procedure is carried out illustratively as follows:

By performing necessary operations, the user first selects one track to be erased and then gets an erasure process executed. The track selected by the user is thereupon erased from the disc and managed as such.

When it is necessary to erase two or more tracks from a plurality of tracks recorded on a disc, the erase procedure above needs to be carried out for each track to be erased. That is, the conventional erase procedure does not provide for collective erasure of a plurality of tracks.

From the viewpoint of efficient editing involving track erasure, it is only natural that users should be offered a way to erase multiple tracks with a single erase procedure.

### SUMMARY OF THE INVENTION

In solving the foregoing and other problems of the related art and according to one aspect of the invention, there is provided an editing system constituted by a recording and reproducing apparatus which houses a storage medium having a plurality of programs stored thereon and by an editing apparatus connected to the recording and reproducing apparatus via a suitable interface in order to erase collectively multiple desired programs from the plurality of programs stored on the storage medium housed in the recording and reproducing apparatus, wherein the editing apparatus comprises: a receiving element for receiving via the suitable interface information about the plurality of programs stored on the storage medium housed in the recording and reproducing apparatus; a displaying element for displaying program-related information based on the information received by the receiving element regarding the plurality of programs stored on the storage medium housed in the recording and reproducing apparatus; an operating element for designating multiple programs desired to be erased from the plurality of programs on the basis of the program-related information displayed on the displaying element; a generating element for generating erasure information for collectively erasing the multiple desired programs designated by the operating element; and a transmitting element for transmitting the erasure information generated by the generating element to the recording and reproducing apparatus via the suitable interface; and wherein the recording and reproducing apparatus comprises: a transmitting element for transmitting via the suitable interface the information about the plurality of programs stored on the storage medium housed in the recording and reproducing apparatus; a receiving element for receiving the erasure information transmitted from the editing apparatus via the suitable interface; and an editing element for erasing the multiple desired programs designated by the operating element of the editing apparatus for erasure from the plurality of programs stored on the storage medium on the basis of the erasure information received by the receiving element.

According to another aspect of the invention, there is provided an editing apparatus which is connected via a suitable interface to a recording and reproducing apparatus housing a storage medium having a plurality of programs stored thereon and which erases collectively multiple desired programs from the plurality of programs stored on the storage medium housed in the recording and reproducing apparatus, the editing apparatus comprising: a receiving element for receiving via the suitable interface information about the plurality of programs stored on the storage medium housed in the recording and reproducing apparatus; a displaying element for displaying program-related information based on the information received by the receiving element regarding the plurality of programs stored on the storage medium housed in the recording and reproducing apparatus; an operating element for designating multiple programs desired to be erased from the plurality of programs on the basis of the program-related information displayed on the displaying element; a generating element for generating erasure information for collectively erasing the multiple desired programs designated by the operating element; and a transmitting element for transmitting the erasure information generated by the generating element to the recording and reproducing apparatus via the suitable interface.

Other objects, features and advantages of the invention will become more apparent upon a reading of the following description and appended drawings.

### BRIEF DESCRIPTION OF THE DRAWINGS

Fig. 1 is a block diagram of a digital satellite broadcast receiving system compatible with embodiments of this invention;
Fig. 2 is a block diagram of a receiving device (AV system) embodying the invention;
Fig. 3 is a block diagram of a recording and reproducing apparatus embodying the invention;
Fig. 4 is an explanatory view of disc cluster and sector assignments according to the invention;
Fig. 5 is an explanatory view of a disc sector format according to the invention;
Figs. 6A, 6B and 6C are explanatory views of disc address formats according to the invention;
Figs. 7A and 7B are explanatory views of a typical disc address according to the invention;
Fig. 8 is an explanatory view of a disc area structure according to the invention;
Fig. 9 is an explanatory view of U-TOC sector 0 according to the invention;
Fig. 10 is an explanatory view of a typical linking arrangement in U-TOC sector 0;
Fig. 11 is an explanatory view of U-TOC sector 1 according to the invention;
Fig. 12 is an explanatory view of U-TOC sector 2 according to the invention;
Fig. 13 is a block diagram of a personal computer;
Fig. 14 is an explanatory view of an IEEE 1394 stack model compatible with the embodiment of the invention;
Fig. 15 is an explanatory view of a cable structure in compliance with the IEEE 1394;
Figs. 16A, 16B and 16C are explanatory views illustrating how signals are transmitted in accordance with the IEEE 1394;
Fig. 17 is an explanatory view describing bus connection requirements according to the IEEE 1394;
Figs. 18A, 18B and 18C are conceptual views explaining how node IDs are established in an IEEE 1394 system;
Fig. 19 is an explanatory view outlining a packet transmission in accordance with the IEEE 1394;
Figs. 20A and 20B are a process transition diagram and a table showing basic transaction rules on asynchronous communication;
Figs. 21A through 21E are explanatory views of an addressing structure of an IEEE 1394 bus arrangement;
Fig. 22 is a schematic view of a CIP structure;
Fig. 23 is an explanatory view of typical connective relations determined by plugs;
Figs. 24A and 24B are explanatory views of plug control registers;
Fig. 25 is a process transition diagram of a write transition stipulated for asynchronous communication;
Fig. 26 is a schematic view of an asynchronous packet (AV/C command packet) structure;
Fig. 27 is a table of typical ctype/response definitions contained in an asynchronous packet;
Figs. 28A and 28B are tables of typical subunit type definitions and opcode definitions contained in an asynchronous packet;
Fig. 29 is an explanatory view of a plug structure for asynchronous communication;
Figs. 30A, 30B and 30C are explanatory views of a plug address structure for asynchronous communication;
Figs. 31A, 31B and 31C are other explanatory views of the plug address structure for asynchronous communication;
Figs. 32A and 32B are explanatory views showing how plug-to-plug processing takes place in asynchronous communication;
Fig. 33 is an explanatory view illustrating asynchronous connection transmission procedures;
Fig. 34 is an explanatory view of a typical MD control window on display;
Fig. 35 is an explanatory view of another MD control window on display (when tracks to be erased are selected);
Fig. 36 is an explanatory view of another MD control window on display (after selected tracks have been erased);
Fig. 37 is an explanatory view of a data structure in a VENDOR DEPENDENT command;
Fig. 38 is an explanatory view of a data structure in a MULTIPLE ERASE command;
Fig. 39 is an explanatory view of an erased track bit mask format; and
Fig. 40 is a process transition diagram showing steps to be carried out for executing track erasure.

### DETAILED DESCRIPTION OF THE PREFERRED EMBODIMENTS

Preferred embodiments of this invention will now be described in the following order:
1. Digital Satellite Broadcast Receiving System
   1-1. Overall Configuration
   1-2. Mini-disc Recording and Reproducing Apparatus
      1-2-1. Structure of MD Recorder/Player
      1-2-2. Sector Format and Addressing Scheme
      1-2-3. Area Structure
      1-2-4. U-TOC
         1-2-4-1. U-TOC Sector 0
         1-2-4-2. U-TOC Sector 1
         1-2-4-3. U-TOC Sector 2
         1-2-4-4. U-TOC Sector 4
   1-3. Personal Computer
2. Data Communications of the Invention in Compliance with the IEEE 1394
   2-1. Overview
   2-2. Stack Model
   2-3. Forms of Signal Transmission
   2-4. Bus Connection between Devices
   2-5. Packets
   2-6. Transaction Rules
   2-7. Addressing
   2-8. CIP (Common Isochronous Packet)
   2-9. Connection Management
   2-10. Commands and Responses under FCP
   2-11. AV/C Command Packet
   2-12. Plugs
   2-13. Asynchronous Connection Transmission Procedures
3. Editing by Erasure According to the Invention
   3-1. Operating Steps
   3-2. MULTIPLE ERASE Command
   3-3. Processes

### 1. Digital Satellite Broadcast Receiving System

### 1-1. Overall Configuration

An editing apparatus of the invention is assumed to be incorporated in an MD recorder/player capable of recording and reproducing audio data to and from a mini-disc (MD), i.e., a magneto-optical disc.

The MD recorder/player is assumed to constitute part of an AV system for transmitting and receiving data over an IEEE 1394 bus. The AV system is structured so as to receive digital satellite broadcasts and download the received data.

Below is an overview of a digital satellite broadcast receiving system comprising the AV system embodying the invention.

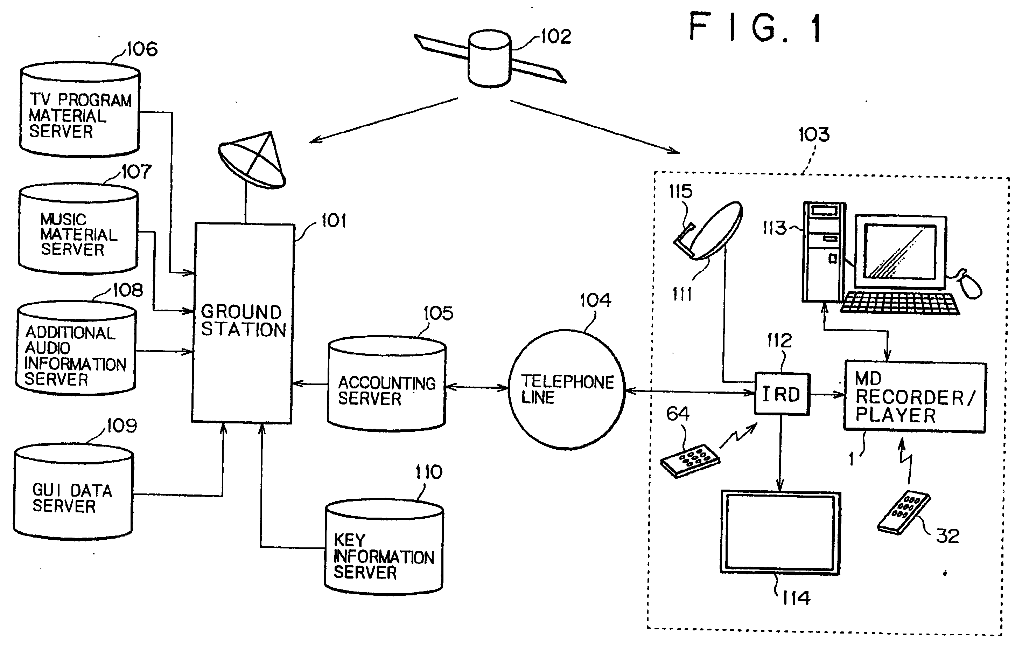

Fig. 1 is a block diagram showing an overall constitution of the inventive digital satellite broadcast receiving system. As shown in Fig. 1, a ground station 101 for digital satellite broadcasting is supplied with materials of TV program broadcasts from a TV program material server 106, materials of music data from a music material server 107, additional audio information from an additional audio information server 108, and GUI data from a GUI data server 109.

The TV program material server 106 supplies materials of ordinary broadcast programs. The materials of music broadcasts sent from this server are composed of moving pictures and sound. For example, a music broadcast program may utilize materials of moving pictures and sound provided by the TV program material server 106 to compose pieces of the latest music to be broadcast illustratively for promotion purposes.

The music material server 107 supplies audio programs using audio channels. The materials of audio programs are composed solely of sound. In operation, the music material server 107 transmits audio program materials over a plurality of audio channels to the ground station 101.

The program broadcast on each audio channel is constituted by repeats of the same pieces of music at predetermined intervals. Furnished independently of one another, the audio channels may be used in a number of ways. Illustratively, one audio channel may broadcast several pieces of the latest Japanese pop music repeatedly for a predetermined period of time, while another audio channel may carry a number of pieces of the latest overseas pop music repeatedly for a certain period of time.

The additional audio information server 108 supplies time information and like data about pieces of music output by the music material server 107.

The GUI data server 109 supplies GUI data by which to form a GUI screen that is used by users for their operations. For example, if it is desired to construct a GUI screen regarding downloading of music (to be described later), the server 109 is tapped for image and text data by which to form pages listing distributed pieces of music and pages carrying related information about such pieces of music, as well as data by which to constitute still pictures of album jackets. The GUI data server 109 also offers EPG (Electrical Program Guide) data allowing the AV system 103 to provide so-called EPG displays.

GUI data may be supplied illustratively in accordance with MHEG (Multimedia Hypermedia Information Coding Experts Group) standards. The MHEG standards are internationally recognized criteria according to which multimedia information, procedures and operations as well as their combinations are handled as coded objects for use in producing titles (e.g., GUI screens) as scenarios. This embodiment of the invention is assumed to adopt MHEG-5.

The ground station 101 receives information sent from the TV program material server 106, music material server 107, additional audio information server 108 and GUI data server 109, multiplexes the received information, and transmits the multiplexed information.

With this embodiment, video data from the TV program material server 106 are subject to coded compression based on the MPEG (Moving Picture Experts Group) 2 standard, and audio data from the server are subject to coded compression based on the MPEG 2 audio standard. Audio data from the music material server 107 are subject to coded compression based on either the MPEG 2 audio standard or ATRAC (Adoptive Transform Acoustic Coding) depending on the audio channel in use.

Upon multiplexing, such data are encrypted by use of key information sent from a key information server 110.

A typical internal structure of the ground station 101 will be described later.

Signals from the ground station 101 are received by receiving equipment 103 of each household (called the AV system) via a satellite 102. The satellite 102 carries a plurality of transponders each having illustratively a transmission capacity of 30 Mbps. The household AV system 103 comprises a parabolic antenna 111, an IRD (Integrated Receiver Decoder) 112, a monitor device 114, an MD recorder/player 1, and a personal computer 113. The setup in Fig. 1 is shown to include a remote controller 64 for operating the IRD 112, and a remote controller 32 for manipulating the MD recorder/player 1.

The parabolic antenna 111 receives signals transmitted via the satellite 102. The received signals are converted to a predetermined frequency by an LNB (Low Noise Block Down Converter) 115 attached to the parabolic antenna 111. The converted signals are then fed to the IRD 112.

The IRD 112 works broadly as follows: a signal of a desired channel is selected from the received signals. From the selected signal, video and audio data constituting a program are demodulated and output as a video and an audio signal. The IRD 112 also outputs a GUI screen based on GUI data transmitted in multiplexed relation with the program data. Such outputs from the IRD 112 are supplied illustratively to the monitor device 114. In turn, the monitor device 114 outputs images along with sound constituting the program received and selected by the IRD 112. The GUI screen may be displayed by the user carrying out operations, to be described later.

The MD recorder/player 1 is capable of recording and reproducing audio data to and from the loaded mini-disc. It is possible for the recorder/player to record audio data (i.e., music data), related still picture data (in picture file) representing illustratively album jackets, and text data (in text file) such as words of songs and liner notes onto the disc, and to reproduce and output such picture and text file data in synchronism with the reproduced audio data.

In the description that follows, the picture and text file data attached to the audio data may be referred to as auxiliary data (AUX data) where appropriate, as is often the case with the handling of the MD recorder/player 1, to be described later.

The personal computer 113 performs various kinds of edit processing upon admitting received data from the IRD 112 or reproduced data from the MD recorder/player 1. The user may operate the personal computer 113 illustratively to control operations of the IRD 112 and MD recorder/player 1.

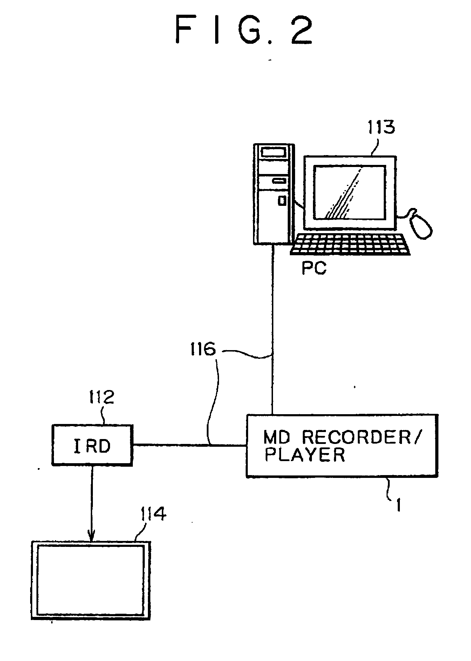

As depicted in Fig. 2, the AV system 103 of this embodiment is assumed to have the IRD 112, MD recorder/player 1, and personal computer 113 interconnected by use of an IEEE 1394 bus 116. In other words, the IRD 112, MD recorder/player 1, and personal computer 113 constituting the AV system 103 are each assumed to have a data interface compatible with the IEEE 1394 data transmission standard.

In the setup above, audio data (i.e., downloaded data) representing pieces of music are received by the IRD 112, subjected to ATRAC compression, and recorded as compressed. Auxiliary data uploaded by the transmitting side along with audio data may also be downloaded and recorded.

As shown in Fig. 1, the IRD 112 can communicate illustratively with an accounting server 105 over a telephone line 104. An IC card holding various kinds of information, to be described later, is inserted into the IRD 112. If audio data constituting pieces of music are downloaded, then history information regarding the downloaded data is written to the IC card. The information in the IC card is sent to the accounting server 105 in a suitably timed manner over the telephone line 104. In turn, the accounting server 105 computes the amount to be billed based on the transmitted history information and sends the bill to the user.

In the inventive system, as described, the ground station 101 multiplexes video and audio data constituting the materials of music program broadcasts from the TV program material server 106, audio data making up the materials of audio channel data from the music material server 107, audio data from the additional audio information server 108, and GUI data from the GUI data server 109, and transmits the multiplexed data.

When the AV system 103 of each household receives the broadcasts, a suitable device such as the monitor device 114 permits viewing of the program on a selected channel. By presenting a GUI screen using GUI data transmitted along with program data, the AV system 103 offers two major facilities. First, the system allows the user to get an EPG (Electrical Program Guide) screen displayed through which to search for desired programs. Second, the, user is allowed to perform relevant operations on GUI screens for specialized services so that such services will be made available in addition to the ordinary program viewing and guidance provided by the broadcast system.

For example, the user may get a GUI screen for an audio (music) data download service displayed and may carry out necessary operations on the screen. The operations cause the audio data constituting the desired piece(s) of music to be downloaded and recorded to the MD recorder/player 1 for storage.

### 1-2. Mini-disc Recording and Reproducing Apparatus

### 1-2-1. Structure of MD Recorder/Player

In the AV system shown in Fig. 2, the invention is embodied in part by the MD recorder/player 1 and personal computer 113. Below is a description of how the MD recorder/player 1 is illustratively structured.

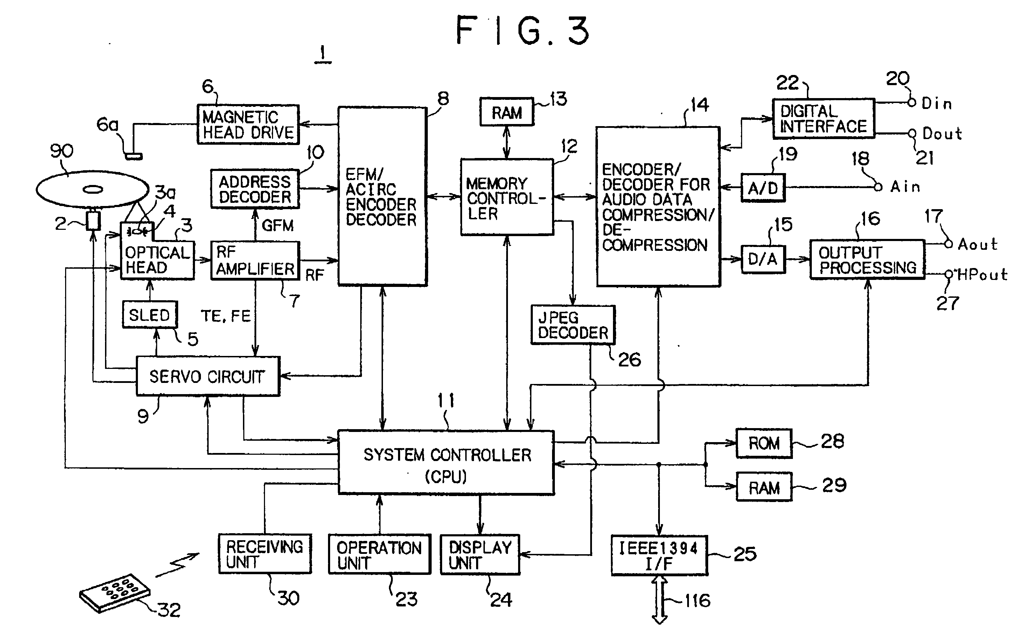

Fig. 3 depicts an internal structure of a recording and reproducing apparatus (MD player/recorder) 1 embodying the invention inside the AV system 103.

A magneto-optical disc (mini-disc) 90 with audio data stored thereon is rotated by a spindle motor 2. At the time of recording or playback, an optical head 3 emits a laser beam onto the magneto-optical disc 90.

For recording, the optical head 3 provides a high-level laser output to heat recording tracks of the disc up to the Curie temperature. For playback, the optical head 3 performs a laser output on a relatively low level to detect data from reflected light coming from the disc through the magnetic Kerr effect.

The optical head 3 has an optical system constituted by a laser diode serving as laser output means, by a polarization beam splitter and by an object lens, as well as detectors for capturing reflected light. The object lens 3a is held by a two-axis mechanism 4 in a manner radially relocating over the disc surface and moving thereto and therefrom.

A magnetic head 6a is positioned in symmetric relation to the optical head 3 across the disc 90. In operation, the magnetic head 6a applies a magnetic field modulated by supplied data to the magneto-optical disc 90.

The optical head 3 as a whole and the magnetic head 6a are moved radially over the disc by a sled mechanism 5.

Upon playback, information retrieved from the disc 90 by the optical head 3 is supplied to an RF amplifier 7. In turn, the RF amplifier 7 processes the supplied information and extracts therefrom a reproduced RF signal, a tracking error signal TE, a focus error signal FE, and groove information GFM (absolute position information recorded as pre-grooves or wobbling grooves on the magneto-optical disc 90).

The reproduced RF signal thus extracted is sent to an encoder/decoder 8. The tracking error signal TE and focus error signal FE are fed to a servo circuit 9. The groove information GFM is forwarded to an address decoder 10.

The servo circuit 9 generates various servo drive signals upon receipt of the tracking error signal TE and focus error signal FE and in accordance with a track jump command and an access command from a system controller 11 (microcomputer) as well as detected rotating speed information from the spindle motor 2. The servo drive signals thus generated are used to control the two-axis mechanism 4 and sled mechanism 5 for focusing and tracking control and to keep the spindle motor 2 at a constant linear velocity (CLV).

The address decoder 10 decodes the supplied groove information to extract address information therefrom. The address information is sent to the system controller 11 for control over various operations.

The reproduced RF signal is subjected to such decoding processes as EFM demodulation and CIRC by the encoder/decoder 8. During the processing, address and sub-code data are extracted and fed to the system controller 11.

Audio data (sector data) having undergone such decoding processes as EFM demodulation and CIRC by the encoder/decoder 8 are written temporarily to a buffer memory 13 under control of a memory controller 12. Retrieval of data from the disc 90 by the optical head 3 and transfer of reproduced data from the optical head 3 to the buffer memory 13 are carried out at a rate of 1.41 Mbits/sec., usually in an intermittent fashion.

The data written to the buffer memory 13 are retrieved in a properly timed manner for transfer at a rate of 0.3 Mbits/sec. to an encoder/decoder 14. The encoder/decoder 14 subjects the received data in compressed format to decoding and other related reproduced-signal processes to generate a digital audio signal sampled at a frequency of 44.1 KHz and quantized in 16 bits.

The digital audio signal is converted to an analog signal by a D/A converter 15. The analog signal is sent to an output processing unit 16 for level and impedance adjustment before being output as an analog audio signal Aout through a line output terminal 17 to an external device. The analog audio signal is also fed to a headphone terminal 27 as a headphone output HPout to headphones that may be connected.

The digital audio signal following decoding by the encoder/decoder 14 is sent to a digital interface 22 for output as a digital audio signal Dout through a digital output terminal 21 to an external device. Illustratively, the signal may be output to an external device over an optical cable.

A recording signal (analog audio signal Ain) fed to a line input terminal 18 for writing to the magneto-optical disc 90 is first converted to digital data by an A/D converter 19. The digital data are supplied to the encoder/decoder 14 for audio data compression encoding.

If a digital audio signal Din is supplied through a digital input terminal 20 from an external device, the digital interface 22 extracts control codes from the supplied data. The audio data are forwarded to the encoder/decoder 14 for audio data compression encoding.

Although not shown, a microphone input terminal may obviously be provided to accept microphone input as a recording signal as well.

The data compressed by the encoder/decoder 14 into recording data are written in a temporarily cumulative manner to the buffer memory 13 by the memory controller 12. The data are then retrieved from the buffer memory 13 in increments of a predetermined data size and sent to the encoder/decoder 8 for encoding processes such as CIRC encoding and EFM. After the encoding operation by the encoder/decoder 8, the data are fed to a magnetic head drive circuit 6.

The magnetic head drive circuit 6 supplies the magnetic head 6a with a magnetic head drive signal in accordance with the encoded recording data. Specifically, the magnetic head drive circuit 6 causes the magnetic head 6a to apply an N or S field to the magneto-optical disc 90. At this time, the system controller 11 provides the optical head 3 with a control signal to output a recording-level laser beam.

An operation unit 23 has controls made up of keys and dials to be operated by the user. The controls cover recording and reproducing operations such as playback, recording, pause, stop, fast forward (FF), rewind (REW), and automatic music search (AMS); play mode-related operations such as normal playback, program playback and shuffle playback; display mode-related operations performed to switch display status of a display unit 24; and program editing operations such as divide, combine, and erase operations on tracks (programs) as well as track name input and disc name input.

Operating information coming from these operation keys and dials are sent to the system controller 11 which carries out control operations accordingly.

This embodiment of the invention includes a receiving unit 30 that receives command signals transmitted by the remote controller 32 using illustratively infrared radiation. The receiving unit 30 decodes the received signal to output command code (operating information) accordingly to the system controller 11. The system controller 11 performs its control operations based on the operating information coming from the receiving unit 30 as well.

The display unit 24 is controlled in terms of display operation by the system controller 11. The system controller 11 transmits data to be displayed to a display driver inside the display unit 24 for data display. Given the data, the display driver drives accordingly the display unit 24 such as a liquid crystal display in display operation so that numerals, characters and symbols are displayed.

The display unit 24 indicates operation mode status of the disc currently loaded for recording or playback, as well as the track number, recording/playback time and editing status.

The disc 90 is capable of storing character information (track names, etc.) to be managed in connection with programs furnished as main data. Characters upon storage as character information are displayed on the display unit 24, and character information retrieved from the disc is also displayed.

With this embodiment, the disc 90 may record auxiliary data (AUX) as a data file independent of music and other data constituting programs.

A data file as auxiliary data is made of information such as characters and still pictures. These characters and still pictures may be output and displayed by the display unit 24.

This embodiment of the invention has a JPEG decoder 26 designed to display still pictures and characters made of auxiliary data onto the display unit 24.

More specifically, still picture data making up a data file as auxiliary data are recorded in a compressed file format complying with the JPEG (Joint Photographic Coding Experts Group) criteria. The JPEG decoder 26 admits through the memory controller 12 illustratively a still picture data file that was retrieved from the disc 90 and written cumulatively to the buffer memory 13. The received file is decompressed as per the JPEG criteria before being output to the display unit 24. This causes the display unit 24 to display the still picture data made up of auxiliary data.

For output of character information or still picture information constituted by auxiliary data, it is often preferred to install a full-dot display or CRT display of a relatively large size offering an appreciably high degree of display freedom on its screen. In that case, the auxiliary data may be output through another interface 25 and displayed on such an externally furnished monitor.

Auxiliary data files may be recorded by the user on the disc 90. For such data file input, it may be necessary to use an image scanner, a personal computer and/or a keyboard. Information constituting the auxiliary data may then be input through the interface 25 from these externally added devices.

For this embodiment, an IEEE 1394 interface is assumed to be adopted as the interface 25. In the description that follows, the interface 25 and the IEEE 1394 interface will be referred to interchangeably. The IEEE 1394 interface 25 is connected to various external devices through the IEEE 1394 bus 116.

The system controller 11 is a microcomputer comprising an internal interface. The microcomputer performs the above-described diverse control operations.

A program ROM 28 stores programs for allowing this recording and reproducing apparatus to implement various operations. A work RAM 29 accommodates as needed data and programs for allowing the system controller 11 to carry out various processes.

To write or reproduce data to or from the disc 90 requires retrieving therefrom management information, i.e., P-TOC (pre-mastered TOC) and U-TOC (user TOC). Given such management information, the system controller 11 identifies addresses of those areas on the disc 90 to or from which to record or reproduce data. The management information is retained in the buffer memory 13.

When the disc 90 is loaded, the system controller 11 retrieves its management information by reproducing data from the innermost region on the disc where the information in question is recorded. The retrieved information is placed into the buffer memory 13 which may be referenced subsequently to execute recording, playback or editing of programs on the disc 90.

The U-TOC is updated in keeping with program data recordings and various editing processes. Every time data are recorded or edited, the system controller 11 updates the U-TOC information in the buffer memory 13. The update operation is paralleled in a suitably timed manner by the corresponding update of the U-TOC area on the disc 90.

The disc 90 accommodates auxiliary data files apart from the programs. An AUX-TOC is formed on the disc 90 for managing these auxiliary data files.

Upon retrieval of the U-TOC, the system controller 11 also reads out the AUX-TOC and places it into the buffer memory 13. Managed status of the auxiliary data may later be referenced by looking up the AUX-TOC in the buffer memory 13.

The system controller 11 reads auxiliary data files as needed and in a suitably timed fashion (or simultaneously with retrieval of the AUX-TOC). The retrieved files are placed into the buffer memory 13. The auxiliary data files are then output in a properly timed manner according to the AUX-TOC and displayed in the form of characters and images on the display unit 24 or on an external device via the IEEE 1394 interface 25.

In the above setup, the IEEE 1394 interface 25 is capable of transmitting and receiving audio data. That means the MD recorder/player embodying this invention receives audio data transferred through the IEEE 1394 interface 25 and records the received data to the disc 90.

If the transferred audio data are illustratively digital audio data sampled at a frequency of 44.1 KHz and quantized in 16 bits, then the data are forwarded through the system controller 11 to the encoder/decoder 14 for data compression.

If the transferred audio data turn out to be compressed audio data in compliance with the compression format of this MD recorder/player, then the data are sent through the system controller 11 to the memory controller 12.

### 1-2-2. Sector Format and Addressing Scheme

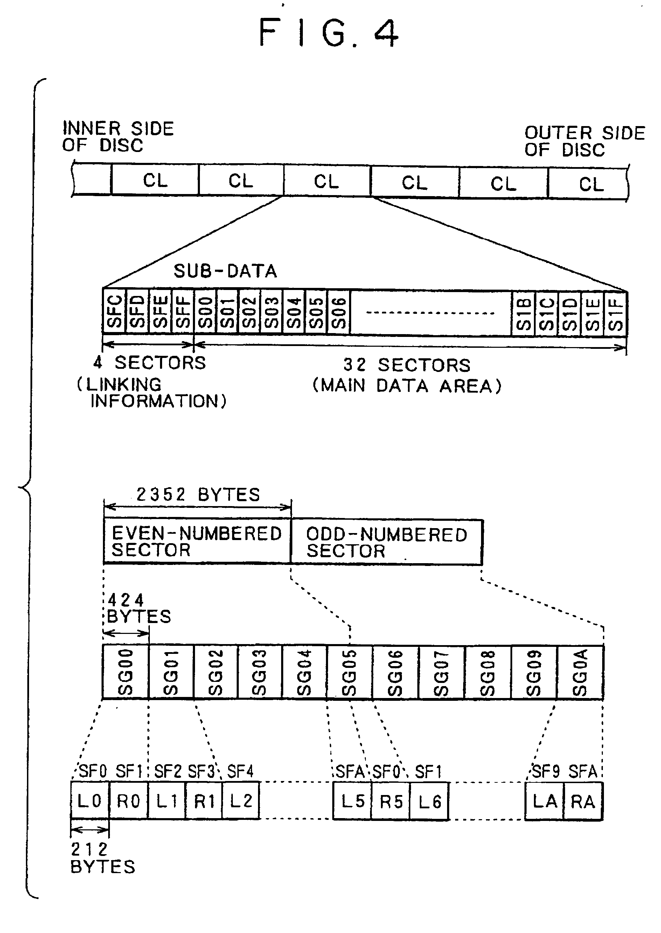

Data units called sectors and clusters will now be described with reference to Fig. 4. On the mini-disc, recording tracks are formed by continuous clusters CL as shown in Fig. 4. Each cluster, which represents the minimum increment of recording, spans two or three tracks.

One cluster CL is constituted by a linking area made up of four sectors SFC through SFF and by a main data area formed by 32 sectors S00 through S1F. Each sector is a data unit of 2,352 bytes in size.

Of the four sectors making up a sub-data area, the sector SFF is called a sub-data sector that may be used to record information as sub-data. The other three sectors SFC through SFE are not used for recording data.

TOC data, audio data and auxiliary data are recorded to main data areas formed by 32 sectors each. An address is attached to each sector.

The sectors are grouped into units called sound groups. Specifically, two sectors are divided into 11 sound groups.

As illustrated, an even-numbered sector (e.g., sector S00) is paired with a contiguous odd-numbered sector (e.g., sector S01) to make up sound groups SG00 through SG0A. Each sound group is formed by 424 bytes and represents a quantity of audio data corresponding to 11.61 msec.

Within each sound group SG, data are recorded separately on a left and a right channel. Illustratively, the sound group SG00 is constituted by left channel data L0 and right channel data R0; the sound group SG01 is formed by left channel data L1 and right channel data R1.

A data area occupied by one block of left or right channel data is called a sound frame having a size of 212 bytes.

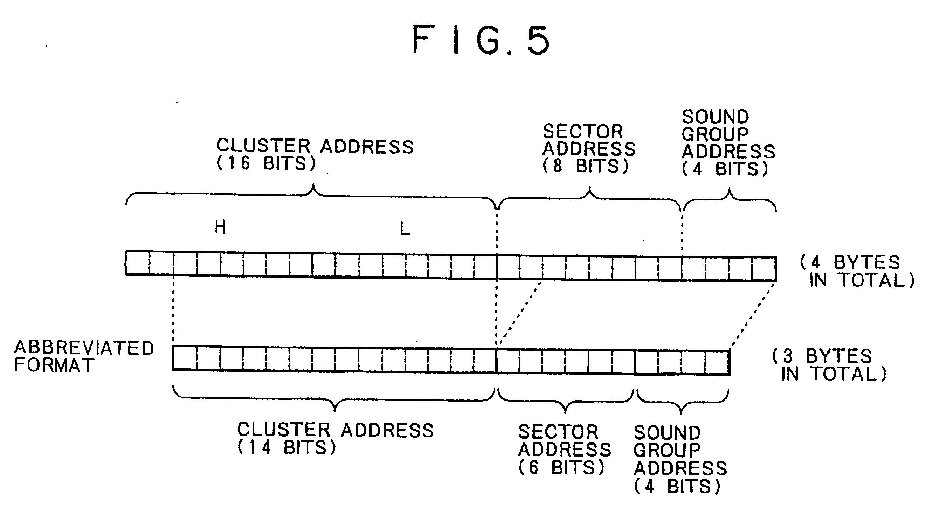

An addressing scheme adopted for the mini-disc system will now be described with reference to Fig. 5. Each sector has a cluster address and a sector address constituting an address part. As shown in the upper part of Fig. 5, each cluster address is formed by 16 bits (= 2 bytes) and each sector address by eight bits (= 1 byte) An address part made up of these three bytes is written to the beginning of each sector.

If the address part is supplemented with a four-bit sound group address, the sound group of each sector may be represented thereby. In the case of management based illustratively on the U-TOC, the added use of sound group addresses makes it possible to reproduce, locate or establish data in units of sound groups.

In the U-TOC and AUX-TOC, an abbreviated address format shown in the lower part of Fig. 5 is used to express a cluster address, a sector address and a sound group address in three bytes.

Because each cluster is made up of 36 sectors, each sector may be expressed in six bits, with the high-order two bits of the sector address omitted. Likewise, since each cluster is expressed in 14 bits spanning up to the outermost disc regions, the high-order two bits of the cluster address may be omitted.

When the sector address and cluster address have their high-order two bits omitted each, each address covering up to a sound group may be expressed in three bytes.

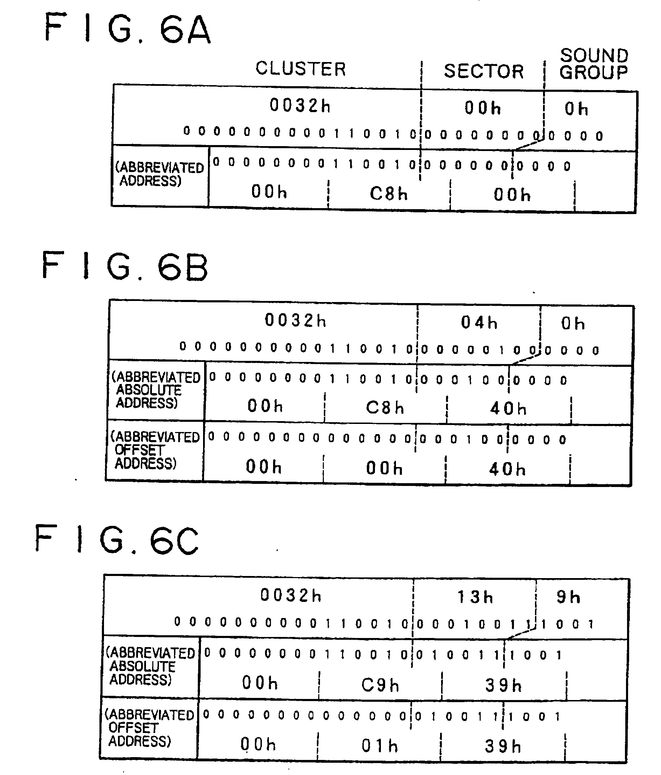

In the U-TOC and AUX-TOC, as will be described later, addresses for managing locations from which to reproduce data as well as for managing playback timings are expressed in the above-described abbreviated address format. These addresses need not be limited to absolute form; they may be furnished on an offset basis. Illustratively, an offset address is an address relative to a reference address 0 such as the beginning of a program (e.g., piece of music), the offset address indicating a location within the program in question. Typical offset addresses are explained below with reference to Figs. 6A, 6B and 6C.

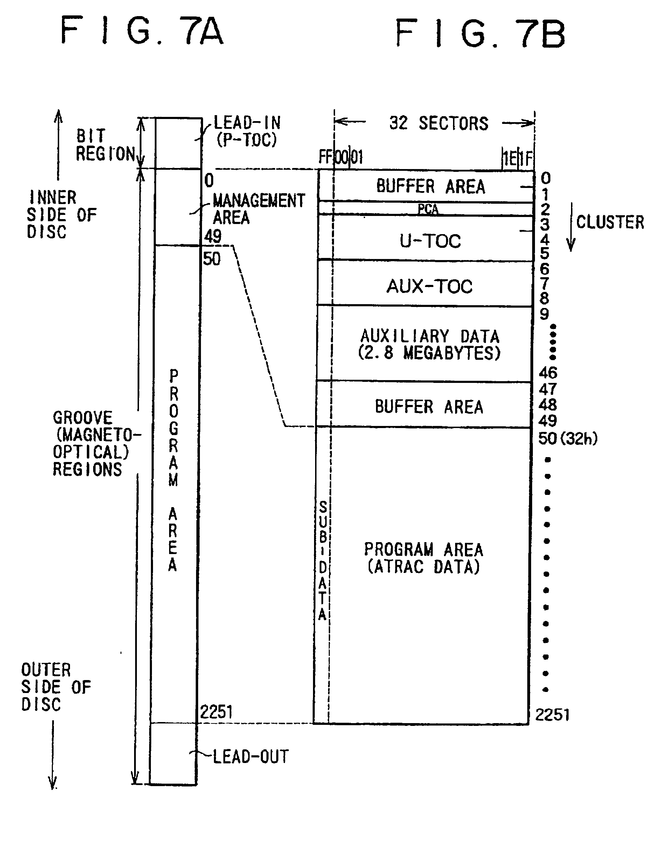

Programs such as pieces of music are recorded starting from a cluster 50 on the disc (cluster 32h in hexadecimal notation; "h" in this specification denotes a hexadecimal number), as will be described later by referring to Figs. 7A and 7B.

Illustratively, the address at the beginning of a first program (cluster 32h, sector 00h, sound group 0h) has a value "0000000000110010000000000000" (i.e., 0032h, 00h, 0h), as shown in the upper part of Fig. 6A. In the abbreviated format, the value is given as "00000000001100100000000000" (i.e., 00h, C8h, 00h), as indicated in the lower part of Fig. 6A.

Relative to that start address, a location within the first program such as the location pointing to cluster 0032h, sector 04h, sound group 0h may be identified by an abbreviated absolute address "00h, C8h, 40h" as shown in Fig. 6B. The corresponding offset address is "00h, 00h, 40h" because the location of cluster 0000h, sector 04h, sound group 0h need only be expressed relative to the start address.

Relative to the start address shown in Fig. 6A, another location within the first program such as that of cluster 0032h, sector 13h, sound group 9h may be identified by an abbreviated absolute address "00h, C9h, 39h" as shown in Fig. 6C, while the corresponding offset address is "00h, 01h, 39h." As indicated by the above examples, addresses may be given in either absolute or offset form when designating locations within a program.

### 1-2-3. Area Structure

A typical area structure of the disc 90 compatible with the MD recorder/player 1 of the invention will now be described with reference to Figs. 7A and 7B.

Fig. 7A shows areas ranging from the innermost to the outermost disc regions. As a magneto-optical disc, the disc 90 has on its innermost side a pit region in which to store read-only data in the form of emboss pits. This is the region where the P-TOC is recorded.

Outside the pit region are magneto-optical regions to and from which to write and read data. Grooves are formed in these regions to guide access to recording tracks.

Clusters 0 through 49 on the innermost side of the magneto-optical regions constitute a management area. Programs such as pieces of music are actually recorded in what is called a program area made up of clusters 50 through 2251. On the outer side of the program area is a lead-out area.

Fig. 7B shows in detail how the management area is typically structured. In Fig. 7B, sectors are arranged in the crosswise direction and clusters in the longitudinal direction.

In the management area, clusters 0 and 1 form a buffer area contiguous to the pit region. Cluster 2 serves as a power calibration area PCA that is used in calibrating the output power of a laser beam.

Clusters 3, 4 and 5 accommodate the U-TOC. Within the U-TOC, as will be described later, a data format is specified for each sector inside each cluster so that the sectors will hold relevant management information. The clusters comprising the sectors making up such U-TOC data are recorded repeatedly three times in clusters 3, 4 and 5.

Clusters 6, 7 and 8 accommodate the AUX-TOC. Within the AUX-TOC, as will also be described later, a data format is designated for each sector inside each cluster so that the sectors will record relevant management information. The clusters comprising the sectors constituting such AUX-TOC data are recorded repeatedly three times in clusters 6, 7 and 8.

Clusters 9 through 46 make up regions in which auxiliary data are recorded. Data files of auxiliary data are formed in units of sectors. The sectors illustratively include picture file sectors containing still picture files (to be described later), text file sectors accommodating text files, and karaoke text file sectors holding text files synchronized with programs.

The data files containing the auxiliary data and the regions in which to record the auxiliary data files inside what is called an auxiliary data area are managed by use of the AUX-TOC.

The capacity of data file storage in the auxiliary data area is 2.8 megabytes when error correction mode 2 is in effect.

In the second half of the program area or on the outer side of the program area (i.e., lead-out area), a second auxiliary data area may be formed in order to increase the capacity of data file storage.

Clusters 47, 48 and 49 make up a buffer area contiguous to the program area. The program area formed by cluster 50 (= 32h) and subsequent clusters contains audio data illustratively representing one or multiple pieces of music in a compressed format called ATRAC.

The programs to be recorded and the regions in which to record data are managed by use of the U-TOC. In each of the clusters in the program area, a sector FFh may be used to record additional information as the above-mentioned sub-data.

The mini-disc system may also play read-only discs on which programs or other read-only data are recorded in pits. The entire surface of such a read-only disc is constituted by pit areas. The programs recorded on that disc are managed by use of the P-TOC in approximately the same manner as with the U-TOC, as will be described later. The U-TOC is not formed on the read-only disc.

It should be noted that if a read-only data file is to be recorded as auxiliary data, then an AUX-TOC needs to be stored in order to manage the data.

### 1-2-4. U-TOC

### 1-2-4-1. U-TOC Sector 0

As discussed above, the system controller 11 initially retrieves the P-TOC and U-TOC as management information from the disc 90 in preparation for program (track) recording or reproduction to or from the disc 90. The retrieved information is referenced as needed.

Below is a description of U-TOC sectors that accommodate information for managing track (music) read and write operations on the disc 90.

As described above with reference to Figs. 7A and 7B, the P-TOC is formed in the innermost pit area on the disc 90 and stores read-only information. The P-TOC is used to manage locations in the recordable area (user area), lead-out area, and U-TOC area on the disc. On a read-only optical disc where all data are recorded in pits, the P-TOC is used to manage pieces of music held in ROM format. The U-TOC is not formed on the read-only disc.

More detailed descriptions of the P-TOC will not be provided further. A U-TOC contained on a recordable magneto-optical disc is described below.

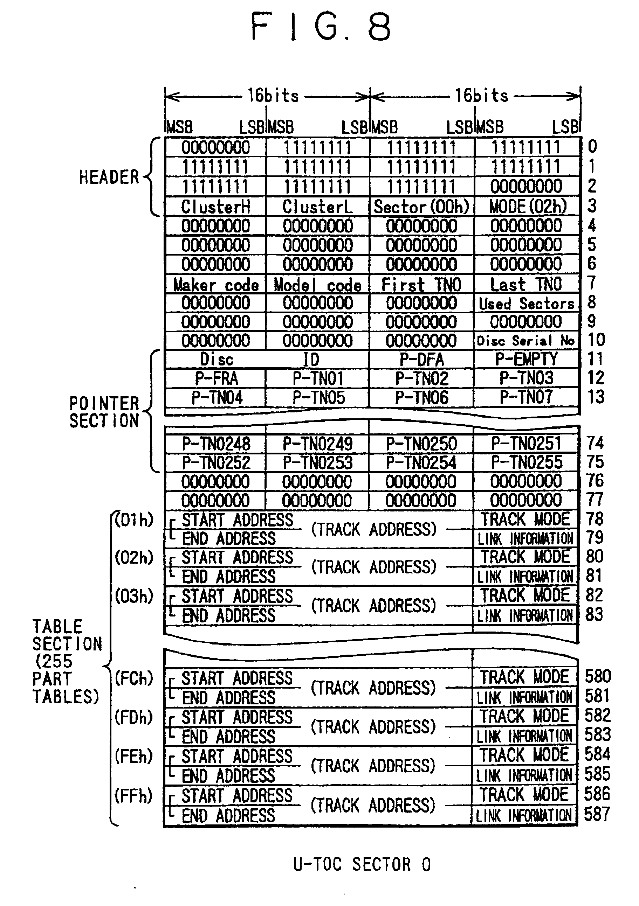

Fig. 8 shows a typical format of U-TOC sector 0. The U-TOC may include sectors 0 through 32. Of these sectors, sectors 1 and 4 hold text information and sector 2 stores dates of recordings.

What follows is a description of U-TOC sector 0 that is always needed upon a write or read operation to or from the disc 90.

U-TOC sector 0 is a data region that accommodates management information about user-recorded programs such as pieces of music and about free areas in which new programs may be recorded.

Illustratively, upon recording of a piece of music to the disc 90, the system controller 11 finds a free area on the disc by referring to U-TOC sector 0, and proceeds to write relevant audio data to the detected area. Upon playback, the system controller 11 references U-TOC sector 0 to find the area holding the desired piece of music to be reproduced, and gains access to that area for data reproduction.

The data region of U-TOC sector 0 (4 bytes × 588 = 2,352 bytes) retains a synchronization pattern made up of all-one or all-zero single-byte data segments arranged at the beginning of the region.

The synchronization pattern is followed by a cluster address (clusters H and L) and a sector address recorded in three bytes and supplemented by mode information in one byte. The pattern and the addresses make up a header. The three-byte address part constitutes an address of the sector in question.

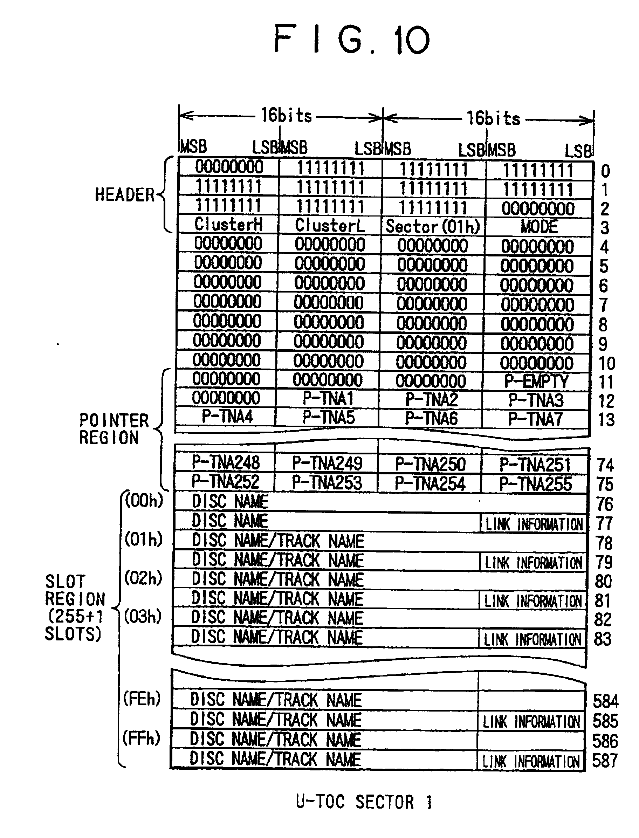

The header in which the synchronization pattern and addresses are recorded for U-TOC sector 0 also applies to the P-TOC and AUX-TOC sectors as well as to the auxiliary file and program sectors. Although the header will not be described further in connection with the sectors shown in Fig. 10 and subsequent figures, each sector is assumed to retain relevant addresses and a similar synchronization pattern.

For each sector, the cluster address is made of two bytes comprising an upper address (cluster H) and a lower address (cluster L), while the sector address is expressed in one byte. That is, this address part is not in the abbreviated format.

The header is followed by such data as a manufacturer's code, a model code, a first track number (first TNO), a last track number (last TNO), sector utilization status (used sectors), a disc serial number, and a disc ID, all stored at suitable byte locations.

The ensuing area is a pointer region holding various pointers (P-DFA, P-EMPTY, P-FRA, P-TNO1 through P-TNO255). These pointers are used to identify user-recorded track (music) regions and data-free areas with reference to a table region, to be described later.

The table region corresponding to the pointers (P-DFA through P-TNO255) includes 255 part tables (01h through FFh). Each part table holds a start address designating the beginning of a part, an end address terminating the part, and mode information (track mode) about the part in question. Because a part indicated by a given part table may be linked to another part, the part table also retains link information designating a part table which holds the start and end addresses of the linked part.

A part signifies a track portion in which temporally continuous data are recorded in a physically continuous manner. A start and an end address designate either a single or a plurality of parts constituting one piece of music (track). These addresses are recorded in the abbreviated format and specify a cluster, a sector and a sound group each.

This type of recording and reproducing apparatus is capable of gaining continuous access to data in discretely located (i.e., physically discontinuous) parts constituting one piece of music (program/track) for uninterrupted playback. Each user-recorded piece of music is sometimes distributed in a plurality of parts so as to utilize recordable areas efficiently.

It is for the reason above that the link information is furnished. The numbers (01h through FFh) assigned to the part tables are utilized in designating relevant part tables to be linked together.

In a management table region of U-TOC sector 0, each part table represents a single part. If a given piece of music is formed by three parts connected, the locations of these parts are managed by use of the three part tables linked together by the relevant link information.

In practice, the link information is given as numbers which are computed in a predetermined manner and which designate byte positions in U-TOC sector 0. Specifically, a part table is designated by "304 + (link information) × 8 (eighth byte)."

Each of the part tables 01h through FFh in the table region of U-TOC sector 0 has its contents pointed to by the pointers (P-DFA, P-EMPTY, P-FRA, P-TNO1 through P-TNO255) in the pointer region, as described below.

The pointer P-DFA indicates a defective area on the magneto-optical disc 90, pointing to either one or the first of a plurality of part tables designating a track portion (part or parts) found faulty because it is damaged or otherwise corrupted. In other words, any defective part is designated by the pointer P-DFA recording one of the numbers 01h through FFh, and the corresponding part table indicates the faulty part by means of its start and end addresses. If a second defective part exists, the current part table retains link information designating a second part table which indicates the second faulty part. If no further defective part exists, the link information is illustratively set to 00h, and no more linked table is provided.

The pointer P-EMPTY indicates either one or the first of a plurality of empty part tables in the management table region. If an empty part table exists, the pointer P-EMPTY records one of the numbers 00h through FFh corresponding to the table in question.

If multiple empty part tables exist, one empty part table designated by the pointer P-EMPTY has link information designating another linked empty part table which in turn designates another empty table, and so on. All empty part tables are linked in the management table region.

The pointer P-FRA indicates a free area (including erased area) to which data may be written on the magneto-optical disc 90. As such, the pointer P-FRA points to either one or the first of a plurality of part tables designating a track portion (part or parts) that constitutes free areas. In other words, any free area is designated by the pointer P-FRA recording one of the numbers 01h through FFh, and the corresponding part table indicates a free-area part by means of a start and an end address. If a plurality of such parts exist, i.e., if there are multiple part tables, these part tables are linked consecutively until the part table having link information 00h is reached.

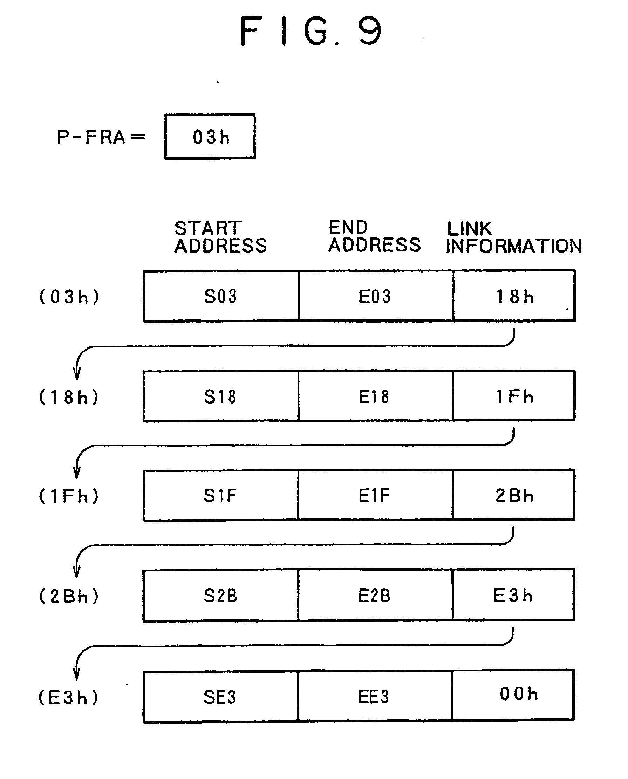

Fig. 9 schematically illustrates managed status of parts constituting free areas. What is shown here are parts 03h, 18h, 1Fh, 2Bh and E3h as free areas designated by the linked part tables 03h, 18h, 1Fh, 2Bh and E3h following the pointer P-FRA. Any defective areas and empty part tables are also managed in like manner.

The pointers P-TNO1 through P-TNO255 provide information about user-recorded tracks such as pieces of music on the magneto-optical disc 90. Illustratively, the pointer P-TNO1 designates one or the temporally first of a plurality of part tables in which first-track data are recorded.

If a piece of music recorded as a first track (a first program) is constituted by a single part and not divided into track segments on the disc, the recorded region of the first track is designated by a start and an end address of a part table pointed to by the pointer P-TNO1.

If a piece of music recorded as a second track (a second program) is made up of a plurality of discretely located parts on the disc, the parts involved are designated in temporal sequence so as to indicate the recorded locations of the second track. More specifically, the part table designated by the pointer P- TNO2 designates by link information a temporally ensuing part table which, also using link information, in turn designates another temporally ensuing part table, and so on. The part tables are linked in temporal sequence until a part table having link information 00h is reached (in the same manner as in Fig. 9).

Thus if data constituting the second piece of music are recorded in parts that are all sequentially designated, the relevant data in U-TOC sector 0 may be used to operate the optical head 3 and magnetic head 6a for consecutive access to the second piece of music for playback or overwrite recording. This makes it possible to retrieve music information from discontinuously located parts or to record data to efficiently utilized recording areas.

As described, area management over the writable magneto-optical disc 90 is effected by use of the P-TOC. Free areas and recordable user areas having pieces of music recorded therein are managed by use of the U-TOC. 1-2-4-2. U-TOC Sector 1

Fig. 10 shows a typical format of U-TOC sector 1. Sector 1 of the U-TOC constitutes a data region in which to record text information entered by the user giving a track name to each recorded track or giving a disc name to the disc in question.

U-TOC sector 1 comprises pointers P-TNA1 through P-TNA255 corresponding to the recorded tracks. The pointers P-TNA1 through P-TNA255 designate 255 slots 01h through FFh of eight bytes each, supplemented by an eight-byte slot 00h. These slots are used to manage text data in approximately the same manner as in the above-described U-TOC sector 0.

The slots 01h through FFh record text information such as a disc title and track names in ASCII code.

Illustratively, a slot designated by the pointer P-TNA1 accommodates characters entered by the user with respect to a first track. When slots are linked by use of link information, more than seven bytes of text (more than 7 characters) may be input corresponding to a single track.

The slot 00h constitutes an area dedicated to recording a disc name. This slot is not designated by the pointer P-TNA(x).

In U-TOC sector 1, the pointer P-EMPTY is also used to manage empty slots.

### 1-2-4-3. U-TOC Sector 2

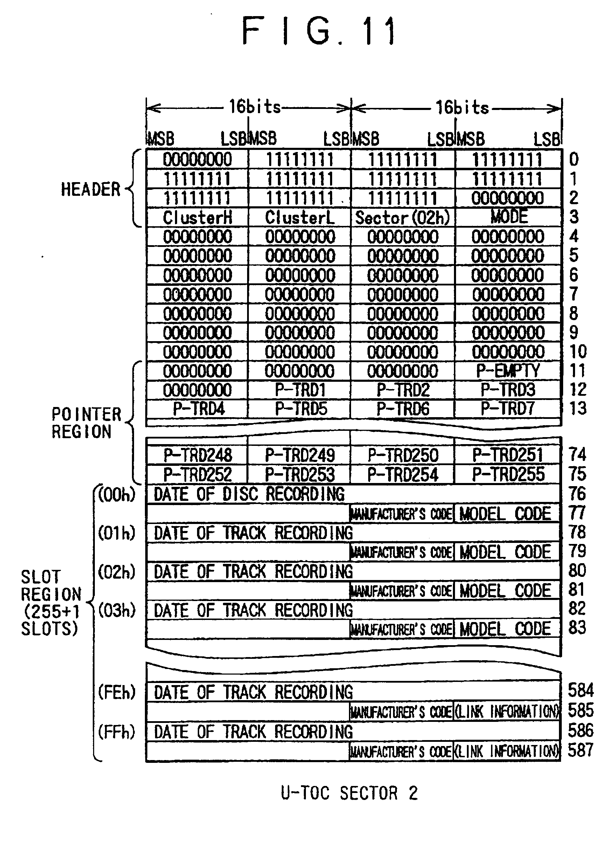

Fig. 11 shows a typical format of U-TOC sector 2. The sector 2 of the U-TOC serves as a data region in which to record primarily dates of recordings made by the user.

U-TOC sector 2 comprises pointers P-TRD1 through P-TRD255 corresponding to the recorded tracks. The pointers P-TRD1 through P-TRD255 designate 255 slots 01h through FFh of eight bytes each. These slots are used to manage date-related data in approximately the same manner as in the above-described U-TOC sector 0.

Each of the slots 01h through FFh records in six bytes a date on which a piece of music (track) was recorded. A date is made up of a year, a month, a day, hours, minutes, and seconds recorded in one byte each. The remaining two bytes accommodate a manufacturer's code and a model code. That is, one byte holds code data identifying the manufacturer that produced the recording apparatus having recorded the music in question, and the other byte retains code data denoting the model of the recording apparatus in use.

For example, when a first piece of music is recorded on a track of the disc, the slot designated by the pointer P-TRD1 records the date of the recording, the manufacturer's code of the recording apparatus, and the model code of the apparatus. The data composed of dates of recordings are recorded automatically by the system controller 11 referencing an internal clock.

Eight bytes constituting a slot 00h make up an area dedicated to recording a date of recording the disc as a whole. This slot is not designated by the pointer P-TRD(x).

In U-TOC sector 2, the pointer P-EMPTY is also used to manage empty slots. Each empty slot has link information recorded in place of a model code. In practice, the slot pointer P-EMPTY heads empty slots that are linked and managed by use of link information.

### 1-2-4-4. U-TOC Sector 4

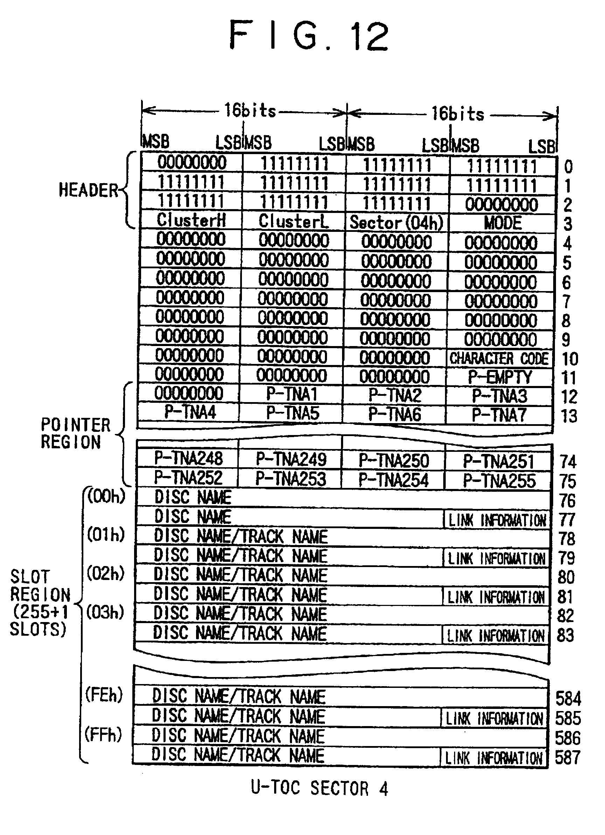

Fig. 12 shows a typical format of U-TOC sector 4. The sector 4 of the U-TOC serves as a data region in which to record text information entered by the user giving a track name to each recorded track or giving a disc name to the disc in question, as is the case with the sector 1. Comparing Fig. 12 with Fig. 10 shows that the format of the sector 4 is virtually the same as that of the sector 1.

U-TOC sector 1 is provided specifically to accommodate code data (two-byte code) representing kanji and alphabetic characters. The data in the sector 1 of Fig. 12 are supplemented by character code attributes recorded in suitable byte locations in the sector 4.

As in the case of the sector 1, text information in U-TOC sector 4 is managed by use of the pointers P-TNA1 through P-TNA255 and 255 slots 01h through FFh designated by the pointers P-TNA1 through P-TNA255.

The MD recorder/player 1 of the invention is compatible with read-only discs on which the U-TOC is not created. On such discs, text information representing a disc name and track names may be recorded in the P-TOC.

More specifically, P-TOC sectors similar to U-TOC sectors 1 and 4 are provided. Each disc manufacturer may record in advance a disc name and track names to such P-TOC sectors.

The AUX-TOC sector shown in Fig. 7 will not be described further.

### 1-3. Personal Computer

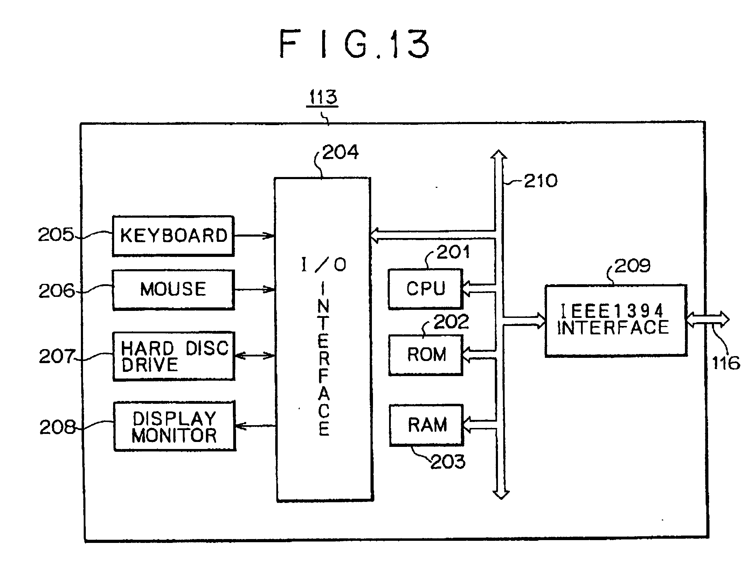

An internal structure of the personal computer 113 will now be described by referring to Fig. 13.

As illustrated, the personal computer 113 has an IEEE 1394 interface 209 for exchanging data with an external entity. The IEEE 1394 interface 209 is connected to the IEEE 1394 bus 116 serving as an external data bus for two-way communication with an external device.

The IEEE 1394 interface 209 demodulates packets received over the IEEE 1394 bus 116, extracts data from the received packets, converts the extracted data to a data format compatible with internal data communication, and outputs the converted data to a CPU 201 through an internal bus 210.

Furthermore, the IEEE 1394 interface 209 admits output data under control of the CPU 201, subjects the data to modulation processes based on an IEEE 1394 format such as conversion into packets, and transmits the modulated data to the outside over the IEEE 1394 bus 116.

The CPU 201 carries out a number of processes in accordance with programs retained illustratively in a ROM 202. This embodiment has in its ROM 202 programs for controlling the IEEE 1394 interface 209 to permit data exchanges in keeping with the IEEE 1394 criteria. That is, the personal computer 113 has a set of hardware and software for enabling data exchanges under the IEEE 1394.

A RAM 203 accommodates as needed data and programs for allowing the CPU 201 to execute various processes.

An input/output interface 204 is connected to a keyboard 205 and a mouse 206. Operation-induced signals from these components are forwarded through the interface 204 to the CPU 201. The I/O interface 204 is also connected to a hard disc drive 207 containing hard discs as a storage medium. Through the I/O interface 204, the CPU 201 may write and read data and programs to and from the hard discs in the hard disc drive 207. In this setup, the I/O interface 204 is further connected to a display monitor 208 for picture display.

The internal bus 210 is constituted illustratively by a PCI (Peripheral Component Interconnect) bus or by a local bus. As such, the internal bus 210 provides interconnections between the internal function circuits.

In the IRD 112 and MD recorder/player 1 described above, their IEEE 1394 interface adopts basically the same functional structure as that of the personal computer 113.

More specifically, the MD recorder/player 1 in Fig. 3 has in its program ROM 28 programs for allowing the system controller 111 to control the IEEE 1394 interface 25.

The system configuration of this embodiment wherein the components are interconnected by means of IEEE 1394 bus lines has been described only for illustrative purposes and is not limitative of the invention. Other suitable configurations may be utilized alternatively.

### 2. Data Communications of the Invention in Compliance with the IEEE 1394

### 2-1. Overview

Below is a description of how data communications of the invention take place in accordance with the IEEE 1394.

The IEEE 1394 constitutes one of serial data communication standards. Under the IEEE 1394, there are two data transmission method: isochronous communication method for periodical communications, and asynchronous communication method for asynchronous communications free of periodicity. Generally, the isochronous communication method is used for data transmission and reception while the asynchronous communication method is adopted for exchanging various control commands. A single cable allows data and commands to be transmitted and received by the two communication methods.

As described, an AV system according to the invention permits exchanging of audio data (including compressed audio data) as user data and auxiliary data (picture files (JPEG still picture data) and text files) compatible with an MD recorder/player, between configured devices over an IEEE 1394 bus arrangement. The AV system also allows a device acting as a controller to exercise remote control over a device selected as a target.

Audio data are time-series data that call for audio output based on playback time, which requires real time processing. In addition, audio data are far greater in quantity than auxiliary data. The auxiliary data are modest in quantity compared with audio data and, unlike ATRAC data, are not strictly subject to real-time constraints although the data are sometimes reproduced in synchronism with audio data playback.

Overall, the IEEE 1394 interface of this embodiment requires that audio data be transmitted and received by the isochronous communication method over an IEEE 1394 bus and that auxiliary data be exchanged by the asynchronous communication method over the same bus. With this embodiment, it is possible for the IEEE 1394 interface either to send audio data and auxiliary data separately, or to transmit both audio and auxiliary data using isochronous cycles on a time division basis, i.e., in an apparently simultaneous manner as will be described later.

What follows is a description of the embodiment carrying out communications in compliance with the IEEE 1394 criteria.

### 2-2. Stack Model

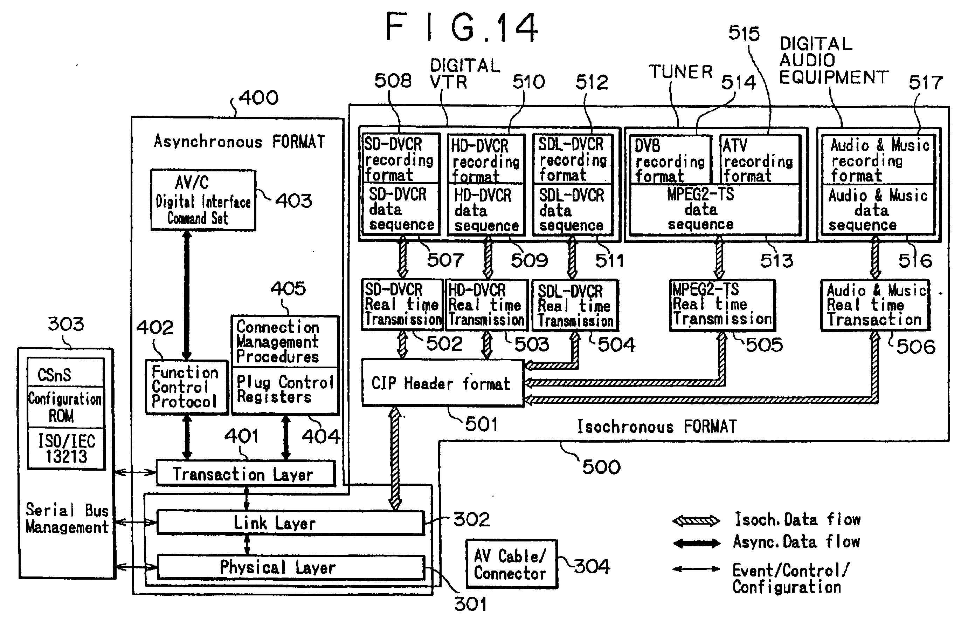

Fig. 14 shows a stack model of the IEEE 1394 as implemented in this embodiment. The IEEE 1394 format comes in two types: asynchronous format (400) and isochronous format (500). Common to both the asynchronous format (400) and the isochronous format (500) is the lowest layer called a physical layer (301) above which is a link layer (302). The physical layer (301) takes care of signal transmission on a hardware basis. The link layer (302) has functions for converting an IEEE 1394 bus illustratively to an internal bus specific to a given device.

The physical layer (301), the link layer (302), and a transaction layer (401) to be described below, are linked to serial bus management 303 by event/control/configuration lines. An AV cable/connector 304 represents physical connectors and cables needed for AV data transmission.

For the asynchronous format (400), the transaction layer (401) comes on top of the link layer (302). The transaction layer (401) defines data transmission protocols of the IEEE 1394. As basic asynchronous transactions, the transaction layer (401) designates a write transaction, a read transaction and a lock transaction, as will be described later.

The transaction layer (401) is topped by an FCP (Function Control Protocol) (402). The FCP (402) executes command control over various AV devices by use of control commands defined as AV/C commands (AV/C digital interface command set) (403).

Above the transaction layer (401) are plug control registers (404) for establishing plugs (logical device connections under the IEEE 1394, to be described later) using connection management procedures (505).

In the isochronous format (500), a CIP header format (501) comes above the link layer (302). Under management of the CIP header format (501), there are stipulated such transmission protocols as SD-DVCR Realtime Transmission (502), HD-DVCR realtime transmission (503), SDL-DVCR realtime transmission (504), MPEG2-TS realtime transmission (505), and Audio and Music realtime transmission (506).

The SD-DVCR Realtime Transmission (502), HD-DVCR realtime transmission (503), and SDL-DVCR realtime transmission (504) are data transmission protocols that address digital VTRs (video tape recorders)

Data to be handled by the SD-DVCR Realtime Transmission (502) are a data sequence (SD-DVCR data sequence (507)) acquired in accordance with an SD-DVCR recording format (508).

Data to be manipulated by the HD-DVCR realtime transmission (503) are a data sequence (SD-DVCR data sequence (509)) obtained in keeping with an HD-DVCR recording format (510).

Data to be dealt with by the SDL-DVCR realtime transmission (504) are a data sequence (SD-DVCR data sequence (511)) gained as per an SDL-DVCR recording format (512).

The MPEG2-TS realtime transmission (505) is a transmission protocol that addresses illustratively tuners for digital broadcasts via satellite. Data to be handled by this protocol are a data sequence (MPEG2-TS data sequence (513)) acquired in compliance with a DVB recording format (514) or an ATV recording format (515).

The Audio and Music realtime transmission (506) is a transmission protocol that addresses a whole range of digital audio equipment including illustratively the MD system embodying this invention. Data to be dealt with by this protocol are a data sequence (audio and music data sequence) obtained in accordance with an audio and music recording format (517).

### 2-3. Forms of Signal Transmission

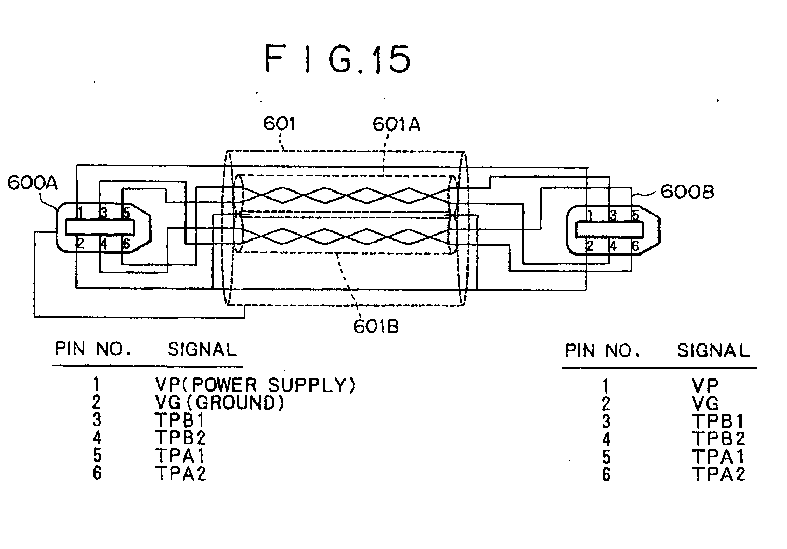

Fig. 15 depicts a typical structure of a cable actually used as an IEEE 1394 bus.

In Fig. 15, connectors 600A and 600B are connected via a cable 601. Pins numbered 1 through 6 are shown to be used as pin terminals attached to the connectors 600A and 600B.

Of the pin terminals on the connectors 600A and 600B, pin No. 1 corresponds to power supply (VP), pin No. 2 to ground (VG), pin No. 3 to TPB1, pin No. 4 to TPB2, pin No. 5 to TPA1, and pin No. 5 to TPA2.

The pins are interconnected between the connectors 600A and 600B as follows:
pin No. 1 (VP) to pin No. 1 (VP);
pin No. 2 (VG) to pin No. 2 (VG);
pin No. 3 (TPB1) to pin No. 5 (TPA1);
pin No. 4 (TPB2) to pin No. 6 (TPA2);
pin No. 5 (TPA1) to pin No. 3 (TPB1); and
pin No. 6 (TPA2) to pin No. 3 (TPB1).
Of the above pin connection pairs, two twisted-line pairs
pin No. 3 (TPB1) to pin No. 5 (TPA1) and
pin No. 4 (TPB2) to pin No. 6 (TPA2)
constitute a signal line 601A for alternately transmitting signals on a differential basis. Furthermore, another two twisted-line pairs
pin No. 5 (TPA1) to pin No. 3 (TPB1) and
pin No. 6 (TPA2) to pin No. 3 (TPB2)
form a signal line 601B for alternately transmitting signals also on a differential basis.

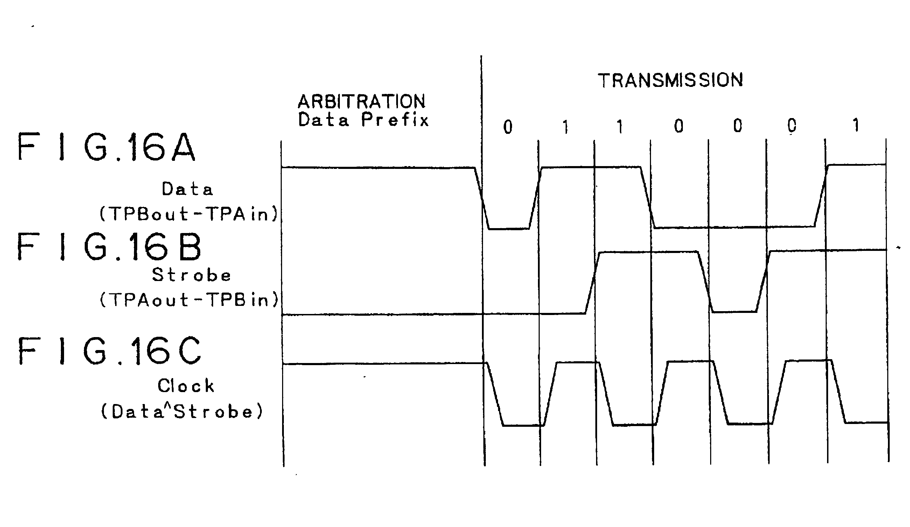

The signals sent over the two signal lines 601A and 601B are a data signal (Data) shown in Fig. 16A and a strobe signal (Strobe) in Fig. 16B.

The data signal in Fig. 16A uses one of the signal lines 601A and 601B. This data signal is output through TPB1 and TPB2 and enters TPA1 and TPA2.

The strobe signal in Fig. 16B is obtained by performing a predetermined logic operation on the data signal and on a transmission clock synchronized with this data signal. For that reason, the strobe signal has a frequency lower than that of the actual transmission clock. The strobe signal uses either of the signal lines 601A and 601B that is not occupied for data signal transmission. Following propagation over the signal line, the strobe signal is output through TPA1 and TPA2 to enter TPB1 and TPB2.

Suppose that the data signal of Fig. 16A and strobe signal of Fig. 16B are input to a device complying with the IEEE 1394. In that case, the device carries out the appropriate logic operation on the input data signal and strobe signal to generate a transmission clock (Clock) shown in Fig. 16C. The transmission clock thus generated is used for necessary input data signal processing.

By adopting such hardware-based data transmission forms, the IEEE 1394 format eliminates the need for transferring a rapid-cycle transmission clock over cables between configured devices. This enhances the reliability of signal transmission.

Although the six-pin arrangement has been described above, this is not limitative of the invention. Alternatively, the IEEE 1394 format may omit the power supply (VP) and ground (VG) to form a four-pin arrangement consisting of two twisted-line pairs, i.e., signal lines 601A and 601B only. The MD recorder/player 1 of the embodiment may illustratively utilize such a four-pin cable arrangement to provide users with a more simplified system than ever.

### 2-4. Bus Connection between Devices

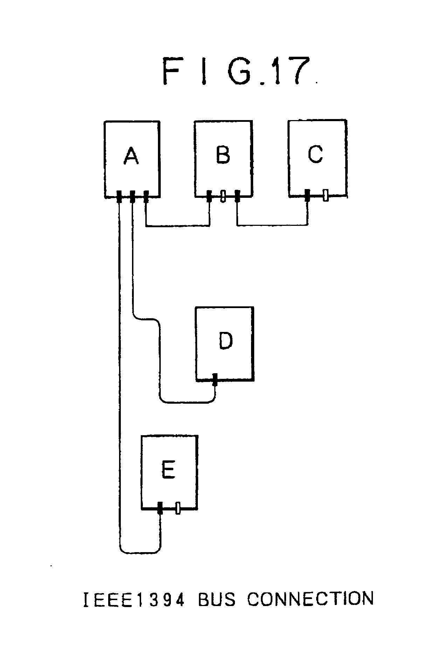

Fig. 17 illustrates schematically how devices are typically interconnected by use of IEEE 1394 buss. The setup of Fig. 17 shows five devices A through E (nodes) being connected for intercommunication via the IEEE 1394 buses (i.e., cables).

The IEEE 1394 interface is capable of what is known as daisy-chain connection whereby apparatuses such as the devices A, B and C in Fig. 17 are serially connected through the IEEE 1394 buses. The interface also permits so-called branch connection whereby an apparatus is connected in parallel with multiple apparatuses, as in the setup of Fig. 17 in which the device A is connected parallelly with the devices B, D and E.

The system as a whole is allowed to have up to 63 devices (nodes) configured through both branch connection and daisy-chain connection. Used alone, the daisy-chain connection permits a configuration of up to 16 devices (16 pop). Terminators needed for the SCSI are not necessary for the IEEE 1394 interface.

The IEEE 1394 interface allows the devices connected by such daisy-chain connection or branch connection to communicate with one another. In the setup of Fig. 17, the devices A, B, C, D and E are allowed to communicate with one another.

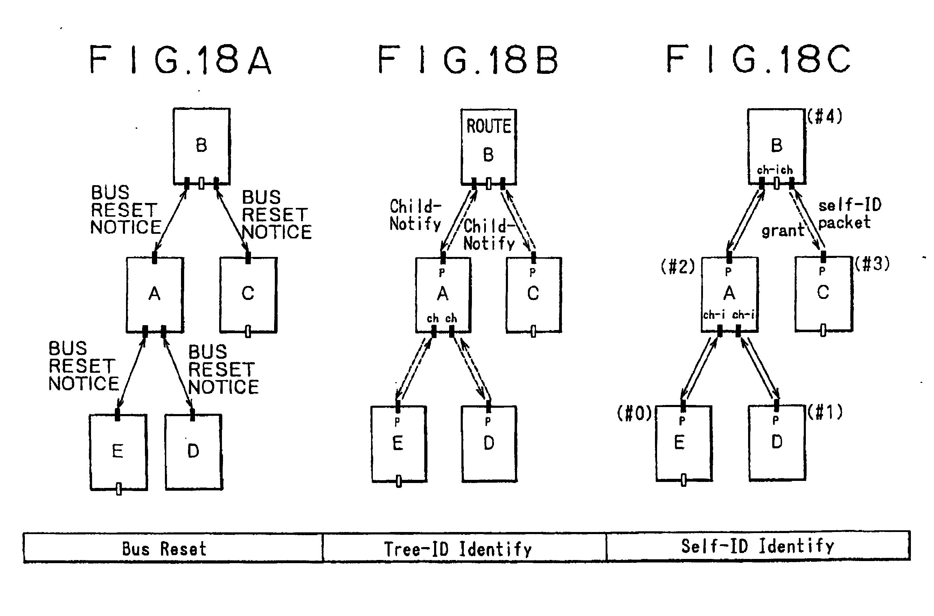

Within the system where a plurality of devices are connected by IEEE 1394 buses (the system is also called the IEEE 1394 system hereunder), each of the configured devices is assigned a node-ID in practice. The process of node-ID assignment is shown schematically in Figs. 18A, 18B and 18C.

In an IEEE 1394 system whose connection setup is shown in Fig. 18A, a bus reset is generated if a cable is connected or disconnected, if any one of the configured devices of the system is turned on or off, or if a spontaneous process takes place under PHY (Physical Layer Protocol). In such a case, a bus reset notice is sent to all devices A, B, C, B and E over the IEEE 1394 buses.

The bus reset notice triggers communications (called child-notify) that result in defining parent-child relations between adjacent devices as depicted in Fig. 18B. That is, a tree structure of the configured devices is built within the IEEE 1394 system. With the tree structure established, the device constituting a root of the tree is defined. The root is a device whose terminals are all defined as "children" (Ch). In the setup of Fig. 18B, the device B is defined as the root. In other words, a terminal of the device A connected to the device B as the root is defined as a "parent" (P).

When the tree structure and its root have been defined in the IEEE 1394 system as described above, each device then outputs a self-ID packet as a declaration of its own node-ID, as shown in Fig. 18C. The root grants one node-ID after another to the connected devices, whereby addresses (node-IDs) of the devices constituting the IEEE 1394 system are determined.

### 2-5. Packets

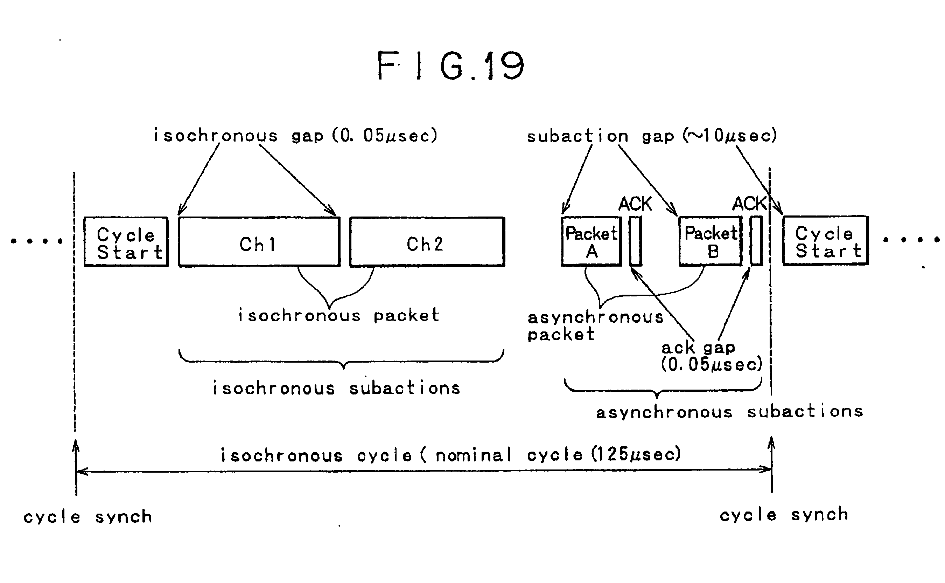

As shown in Fig. 19, the IEEE 1394 format effects data transmission through repeated isochronous cycles (nominal cycles). It is stipulated that each isochronous cycle lasts 125 microseconds on a frequency band of 100 MHz. It is also stipulated that the isochronous cycle may have a duration period other than 125 microseconds. For transmission, data are turned into packets in each isochronous cycle and then transmitted.

As illustrated, each isochronous cycle is headed by a cycle start packet indicating the beginning of the cycle. When to generate cycle start packets is designated by a device defined as a cycle master in the IEEE 1394 system. Details of the cycle start packet generation will not be described further.

Each cycle start packet is followed preferentially by isochronous packets. As shown, the isochronous packets correspond to a channel each and are transferred on a time division basis (in the form of isochronous subactions). In isochronous subactions, the packets are set apart by intervals called isochronous gaps (each lasting illustratively 0.05 microseconds)

As described, the IEEE 1394 system allows isochronous data to be transmitted and received over a single transmission line on a multi-channel basis.

Suppose that compressed audio data (called ATRAC data hereunder) compatible with the MD recorder/player of this embodiment are transmitted by the isochronous method. In that case, if ATRAC data are subject to a single-speed transfer rate of 1.4 Mbps, then time series continuity (i.e., real-time characteristic) is guaranteed by transmitting the data in isochronous packets of 20-odd megabytes per 125-microsecond isochronous cycle.

For example, before transmitting ATRAC data, a device requests an IRM (Isochronous Resource Manager) in the IEEE 1394 system to grant an isochronous packet size large enough to ensure real-time transmission of the data. In response, the IRM grants or withholds permission for the packet size by monitoring the current data transmission status. If permission is granted, the ATRAC data in question are transmitted in isochronous packets over specific channels. This procedure is called band reservation for the IEEE 1394 interface.

Frequency ranges not used for isochronous subactions over the isochronous cycle band are utilized for asynchronous subactions, i.e., for asynchronous transmission of packets.

Fig. 19 shows an example in which two asynchronous packets A and B are transmitted. The asynchronous packets are each followed by an ACK (acknowledge) signal, with an interval called an ACK gap (0.05 microseconds long) interposed therebetween. An ACK signal is output by the receiving side (i.e., target) on a hardware basis informing the transmitting side (i.e., controller) that some asynchronous data have been received during an asynchronous transaction, as will be described later.

An interval called a subaction gap about 10 microseconds long is placed before and after each data transmission unit made of an asynchronous packet and an ACK signal.

Where arrangements are made to transmit ATRAC data in isochronous packets and to send auxiliary data files accompanying the ATRAC data in asynchronous packets, it is possible to transmit both the ATRAC data and the auxiliary data files in an apparently simultaneous fashion.

### 2-6. Transaction Rules

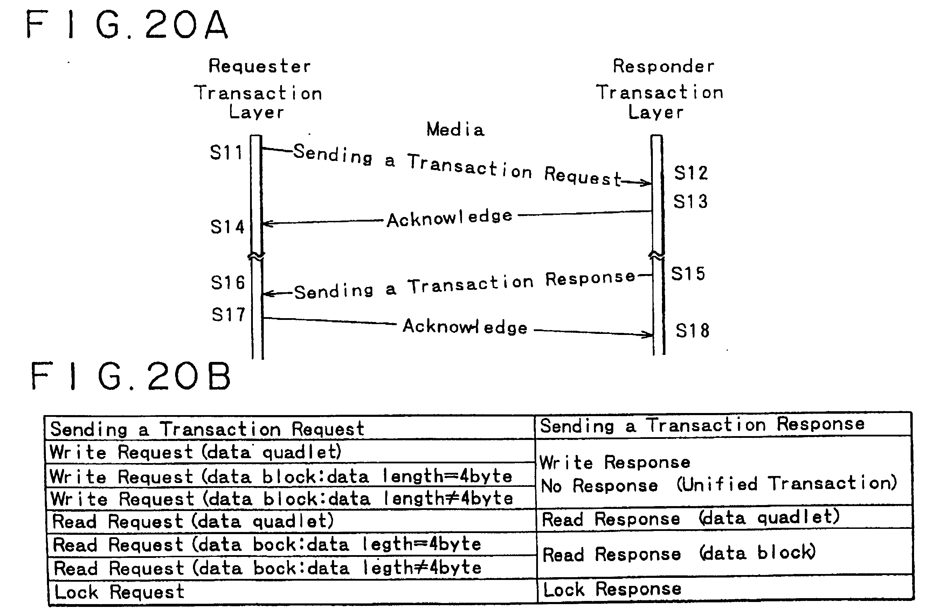

Fig. 20A is a process transition diagram showing basic transaction rules for asynchronous communication. The transaction rules are stipulated in compliance with the FCP.

As depicted in Fig. 20A, a requester (transmitting side) first sends a request to a responder (receiving side) in step S11. On receiving the request (in step S12), the responder sends an acknowledgement back to the requester (in step S13). When receiving the acknowledgement, the requester confirms that the request has been accepted by the responder (in step S14).

In turn, the responder sends a transaction response to the request from the requester (in step S15). Upon receipt of the response (in step S16), the requester returns an acknowledgement to the responder (in step S17) When receiving the acknowledgement, the responder verifies that its response has been received by the requester.

Request transactions shown transmitted in Fig. 20A fall into three categories: write requests, read requests, and lock requests, as listed in the left-hand part of the table in Fig. 20B.

Write requests are commands that designate data write operations. Read requests are commands that specify data read operations. Load requests, thought not discussed hereunder in detail, are commands for swap, compare, and mask operations.

The write requests are further grouped by the data size of the command (operand) in an asynchronous packet (AV/C command packet, to be described later with reference to figures) into three types. One write request type is a write request (data quadlet) for sending a command according to the header size alone in an asynchronous packet. The other two write request types are a write request (data block: data length = 4 bytes) and a write request (data block: data length ≠ 4 bytes). Each of the latter two write request types supplements a header of an asynchronous packet with a data block for command transmission. What makes the two write request types different from each other is that the data size of the operand placed in the data block is four bytes for one request type and something other than four bytes for the other.

As with the write requests, the read requests are further grouped by the data size of the operand in an asynchronous packet into three types: a read request (data quadlet), a read request (data block: data length = 4 bytes), and a read request (data block: data length ≠ 4 bytes).

Response transactions are listed in the right-hand part of the table in Fig. 20B. Either a write response or no response is defined as corresponding to any of the three write request types.

A read response (data quadlet) is defined as corresponding to the read request (data quadlet), and a read response (data block) as corresponding to the read request (data block: data length = 4 bytes) or to the read request (data block: data length ≠ 4 bytes).

A lock response is defined as corresponding to the lock request.

### 2-7. Addressing

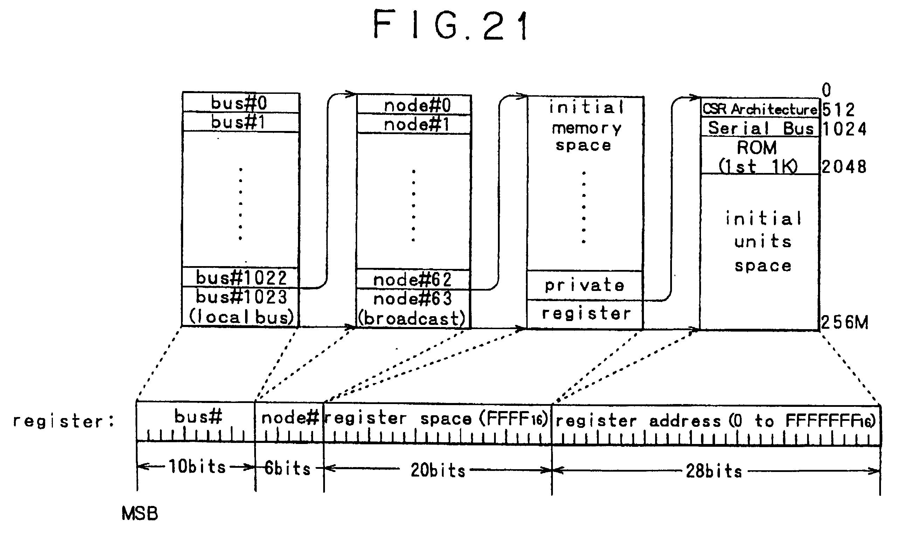

Fig. 21A through 21E show addressing structures of IEEE 1394 buses. As depicted in Fig. 21A, a 64-bit bus address register (address space) is provided in the IEEE 1394 format.

A high-order 10-bit region of the register designates a bus ID for identifying an IEEE 1394 bus. As shown in Fig. 21B, the region permits setting of up to 1,023 bus IDs for buses #0 through #1,022. Bus #1,023 is defined as a local bus.

A six-bit region following the bus address in Fig. 21A designates a node ID of a device connected to the IEEE 1394 bus identified by the bus ID. As depicted in Fig. 21C, the node ID permits identification by up to 63 node IDs numbered #0 through #62.

The 16-bit region comprising the bus ID and node ID above corresponds to a destination ID in a header of an AV/C command packet, to be described later. In the IEEE 1394 system, each device connected to a specific bus is identified by the bus ID and node ID.

A 20-bit region following the node ID in Fig. 21A constitutes a register space. The register space is followed by a 28-bit register address.

The register space has a value [F FF FFh] indicating the register shown in Fig. 21D. The content of this register is defined as depicted in Fig. 21E. The register address designates the address of the register shown in Fig. 21E.

In brief, addressing works as follows: information about an isochronous cycle time and free channels is obtained by referring to serial bus-dependent registers starting illustratively from address 512 [0 00 02 00h] in the register of Fig. 21E.

A reference to the content of a configuration ROM starting from address 1,024 [0 00 04 00h] permits recognition of a node type and a node-unique ID specific to that node type.

### 2-8. CIP

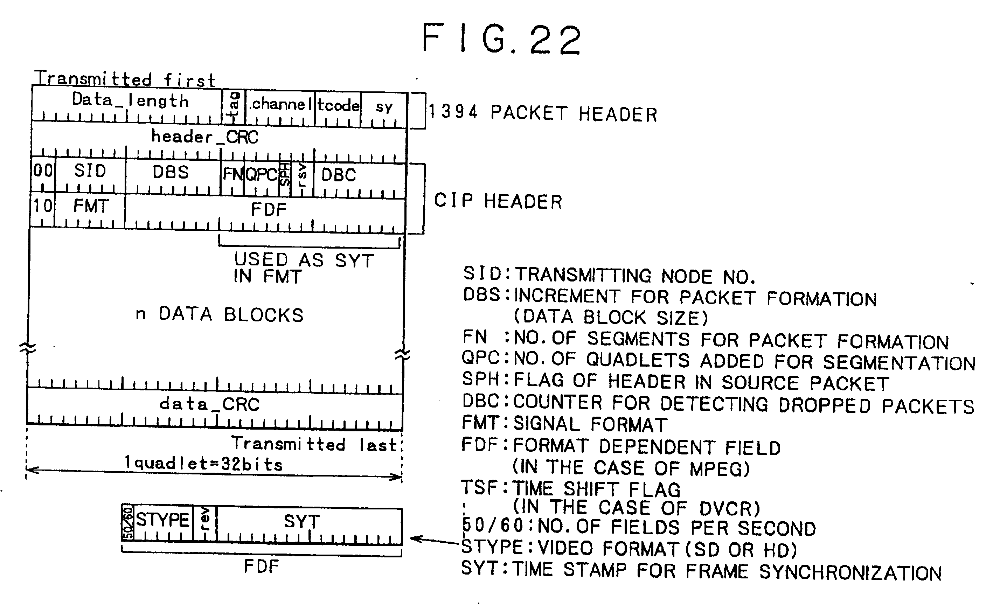

Fig. 22 illustrates a structure of a CIP (Common Isochronous Packet). This is a data structure of the isochronous packet shown in Fig. 19. In IEEE 1394-compatible communications, as mentioned above, ATRAC data (one type of audio data to be recorded and reproduced by the MD recorder/player of this embodiment) are transmitted and received by the isochronous method. That is, quantities of data sufficient to maintain the real-time characteristic are carried by isochronous packets that are transmitted one after another in isochronous cycles.

The first 32 bits (making up a quadlet) of the CIP constitute a 1394 packet header. In this packet header, a high-order 16-bit region indicates a data length followed by a two-bit region that designates a tag. The tag is followed by a six-bit region designating a channel. The channel region is followed by a four-bit designating "tcode" which in turn is followed by a four-bit "sy" code. A quadlet region following the 1394 packet header contains a header_CRC.

A two-quadlet region following the header_CRC constitutes a CIP header. In the high-order quadlet of the CIP header, the most significant two bits are each filled with a "0". A six-bit region after the "00" bits indicates an SID (transmitting node number), followed by an eight-bit region designating a DBS (data block size, i.e., increment of data for packet formation). The DBS region is followed by an FN (of two bits) and a QPC (of three bits) region. The FN region denotes the number of segments for packet formation, and the QPC region represents the number of quadlets added for segmentation.

The QPC region is followed by an SHP (of one bit) region that indicates a flag of the header in a source packet. A DBC region contains a value of a counter for detecting dropped packets.

High-order two bits in the low-order quadlet of the CIP header are each filled with a "0". The "00" bits are followed by an FMT (of six bits) and an FDF (of 24 bits) region. The FMT region denotes a signal format (transmission format) whose value permits identification of a type of data (i.e., data format) placed in this CIP. More specifically, such data types as MPEG stream data, audio stream data, and digital video camera (DV) stream data may be identified by the FMT region. The data format given in the FMT region corresponds illustratively to a transmission protocol such as the SD-DVCR Realtime Transmission (502), HD-DVCR realtime transmission (503), SDL-DVCR realtime transmission (504), MPEG2-TS realtime transmission (505), or Audio and Music realtime transmission (506) under management of the CIP header format (501) shown in Fig. 14.

The FDF region is a format-dependent field designating a more detailed category of the data format classified by the FMT region. Illustratively, audio data may be identified in more detail as linear audio data or MIDI data.

For example, ATRAC data for use with this embodiment are first indicated as data falling under the category of audio stream data in the FMT region. With a predetermined value set to the FDF region, the audio stream data are further shown to be ATRAC data.

If the FMT region indicates MPEG data, then the FDF region holds synchronization control information called a TSF (Time Shift Flag). If the FMT region denotes DVCR (Digital Video Camera) data, the FDF region is defined as shown in the lower part of Fig. 22. This FDF region has a high-order 50/60 region (of one bit) designating the number of fields per seconds, followed by an STYPE region (of five bits) indicating whether the video format is SD or HD. The STYPE region is followed by an SYT region that provides a time stamp for frame synchronization.

Following the CIP header, the data indicated by the FMT and FDF regions are stored in a sequence of "n" data blocks. If the data are shown to be ATRAC data by the FMT and FDF regions, the data blocks contain the ATRAC data. The data blocks are terminated by a data_CRC region.

### 2-9. Connection Management

In the IEEE 1394 format, logical connections called "plugs" are used to define connective relations between devices connected by IEEE 1394 buses.

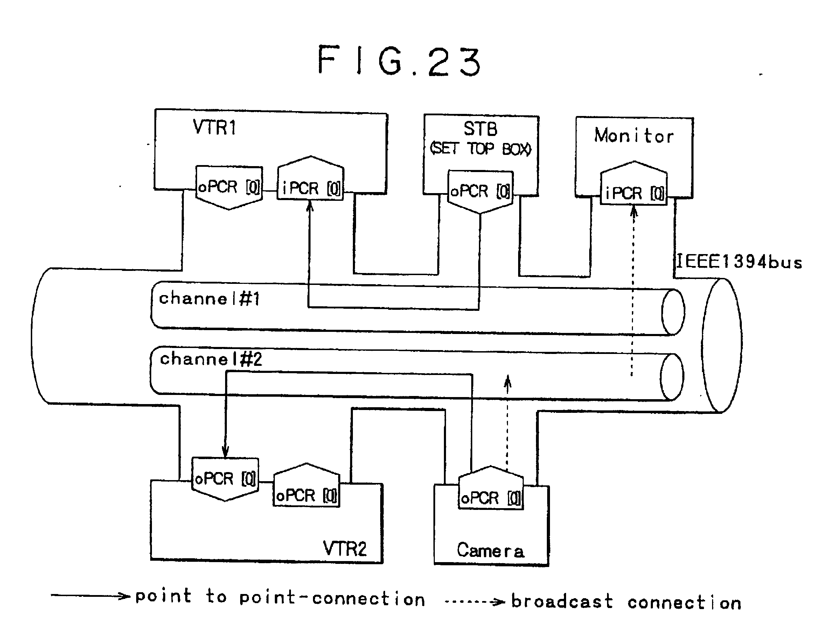

Fig. 23 shows a typical setup of connective relations defined by plugs. The setup constitutes a system having VTR1, VTR2, a set-top box (STB; digital satellite broadcast tuner), a monitor, and a digital still camera all connected via an IEEE 1394 bus.

There are two forms of plug-based IEEE 1394 connections: point-to-point connection, and broadcast connection.

The point-to-point connection specifies relations between a transmitting device and a receiving device. Data transmission takes place over a specific channel from the transmitting device to the receiving device.

On the other hand, the broadcast connection permits data transmission without requiring the transmitting device to specify receiving devices and channels to be utilized. The receiving devices receive the transmitted data without identifying the transmitting device and perform predetermined processes if so required by the content of the received data.

The setup of Fig. 23 shows two point-to-point connection states: one in which the STB send data and the VTR1 receives the data over channel #1, and the other in which the digital still camera sends data and the VTR2 receives the data over channel #2.

Also shown in Fig. 23 is a broadcast connection state for the digital still camera to transmit its data on a broadcasting basis. The broadcast data are shown being received by the monitor which in turn performs a predetermined response process.

The above connections (plugs) are established by a PCR (plug control register) included in an address space of each device configured.

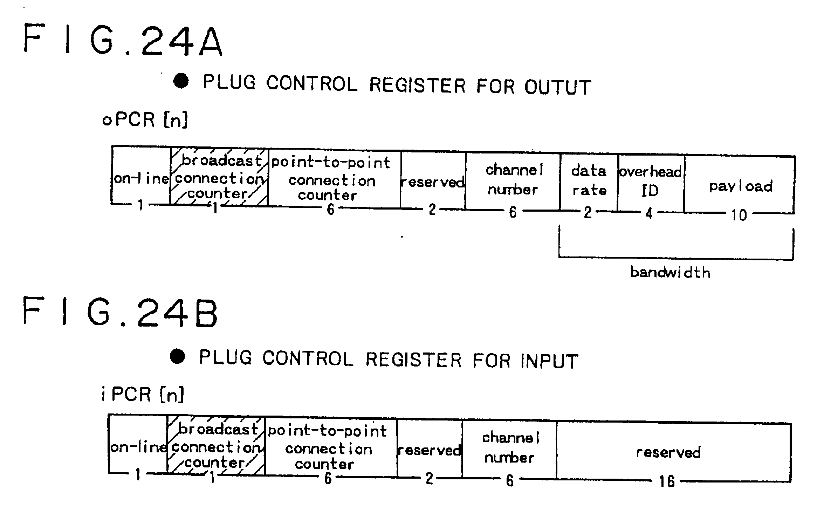

Fig. 24A depicts a structure of a plug control register for output (oPCR[n]), and Fig. 24B indicates a structure of a plug control register for input (iPCR[n]). The registers oPCR[n] and iPCR[n] have a size of 32 bits each.

In the register oPCR of Fig. 24A, illustratively a "1" set to the most significant bit (on-line) indicates data transmission by broadcast connection; a "0" shows that data are transmitted by point-to-point connection over a channel whose channel number is set in a six-bit channel number region starting from the 11th bit relative to the MSB.

In the register iPCR of Fig. 24B, illustratively a "1" set to the most significant bit (on-line) indicates data reception by broadcast connection; a "0" shows that data are received by point-to-point connection over a channel whose channel number is set in a six-bit channel number region starting from the 11th bit relative to the MSB.

### 2-10. Commands and Responses under FCP

In the IEEE 1394 format for this embodiment, auxiliary data (picture files and text files based on JPEG and recorded and reproduced by the MD recorder/player) are transmitted and received by the asynchronous method.

With this embodiment, transmission of auxiliary data by the asynchronous method is regulated under the FCP (402) shown in Fig. 14. Below is a description of a transaction for the transmission governed by the FCP.

A write transaction (see Fig. 20B) prescribed for the asynchronous method is used under the FCP. Auxiliary data are transmitted by this embodiment by utilizing write transactions for asynchronous communication in keeping with the FCP.

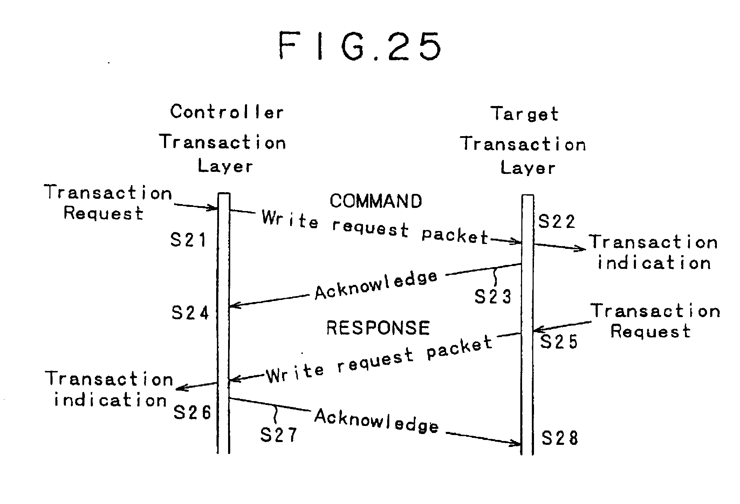

Each of the devices that support the FCP comprises a command/response register. A write transaction is implemented by writing a message to the command/response register as will be explained below with reference to Fig. 25.

Fig. 25 shows a process transition diagram wherein in step S21 a controller generates a transaction request and sends a write request packet to a target for a command transmission. In step S22, the target receives the write request packet and writes data to the command/response register. The target returns an acknowledgement to the controller in step S23, and the controller receives the acknowledgement in step S24. The steps so far constitute a command transmission process.

In a process responding to the command, the target transmits a write request packet (in step S25). On receiving the write request packet, the controller writes data to the command/response register (in step S26). With the write request packet received, the controller also transmits an acknowledgement to the target (in step S27). Receiving the acknowledgement allows the target to confirm that the write request packet has been received by the controller (in step S28).

That is, data transmission (transactions) according to the FCP is based on two processes: the process of command transmission from the controller to the target, and the process of response transmission from the target to the controller.

### 2-11. AV/C Command Packet

As described earlier in reference to Fig. 14, the FCP allows various AV devices to communicate by the asynchronous method using AV/C commands.

Three kinds of transactions, i.e., write, read and lock, are prescribed for asynchronous communication, as explained with reference to Fig. 20B. In practice, a write request/response packet, a read request/response packet, and a lock request/response packet are used in keeping with the different transactions. For the FCP, the write transaction is employed as described above.

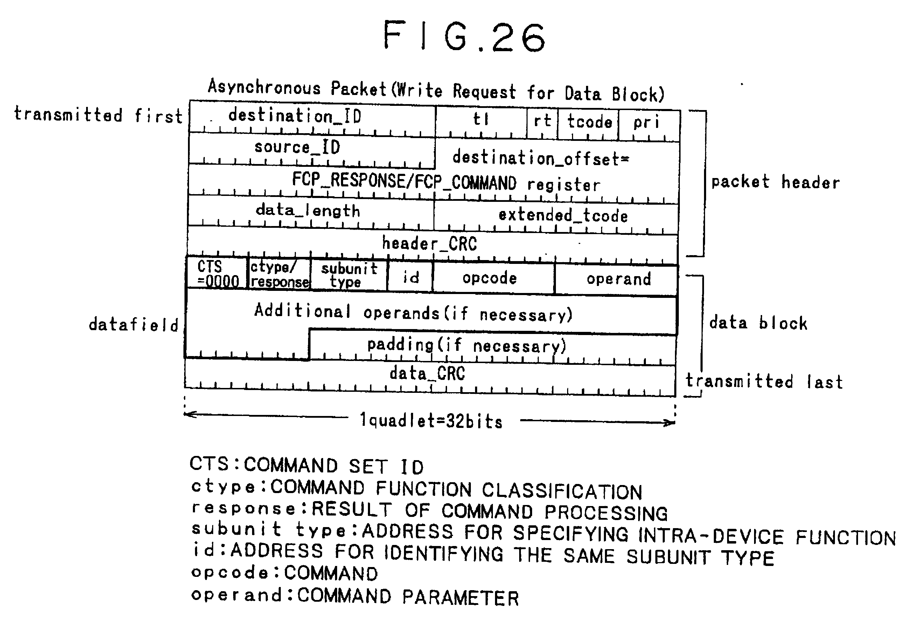

Fig. 26 shows a format of a write request packet (asynchronous packet (write request for data block)) This embodiment uses the write request packet as its AV/C command packet.

High-order five quadlets (i.e., the first through the fifth quadlets) in the write request packet constitute a packet header. A high-order 16-bit region in the first quadlet of the packet header denotes a destination_ID, i.e., an ID of a node serving as a data transfer destination. The destination ID region is followed by a six-bit "tl" (transact label) region representing a packet number. The six-bit region is followed by a two-bit "rt" (retry code) region indicating whether the packet in question is the initially transmitted packet or a retransmitted packet. The "rt" region is followed by a four-bit "tcode" (transaction code) region designating a command code. The "tcode" region is followed by a four-bit "pri" (priority) region indicating the priority of the packet.

A high-order 16-bit region in the second quadlet of the packet header denotes a source_ID, i.e., an ID of a node (node_ID) serving as a data transfer source.

A low-order 16-bit region in the second quadlet and the entire third quadlet, occupying a total of 48 bits, designate a destination_offset indicating two addresses: one for a command register (FCP_COMMAND register), and the other for a response register (FCP_RESPONSE register).

The destination_ID and destination_offset correspond to the 64-bit address space stipulated in the IEEE 1394 format.

A high-order 16-bit region in the fourth quadlet contains a data_length. This region designates the data size of a data region (data field), to be described later (shown enclosed by thick lines in Fig. 26). The data length region is followed by an extended_tcode region used when the transaction code is extended.

A 32-bit region making up the fifth quadlet indicates a header_CRC. This region contains a CRC-computed value to checksum the packet header.

Data blocks are arranged starting from the sixth quadlet following the packet header. A data field is formed at the beginning of data blocks.

High-order four bytes forming the data field heading the sixth quadlet describe a CTS (command and transaction set). The CTS region indicates an ID of a command set for the write request packet in question. For example, a CTS value of "0000" as shown in Fig. 26 defines the content of the data field as an AV/C command. In other words, the write request packet is identified as an AV/C command packet. Thus with this embodiment, the CTS region is filled with "0000" to let the FCP use AV/C commands.

A four-bit region following the CTS has a response written therein indicating the result (i.e., response) of a process corresponding to a "ctype" (command type, i.e., a command function classification) or to a command.

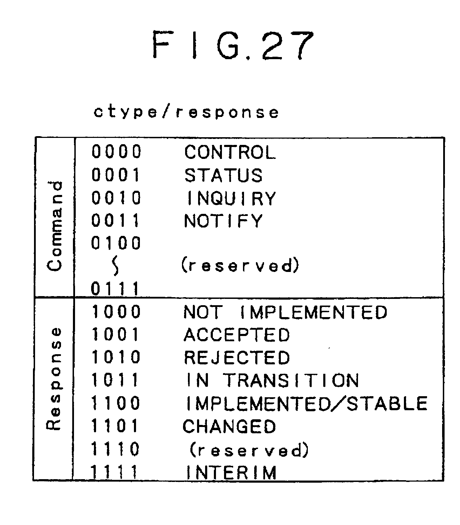

Fig. 27 lists definitions of the command types (ctype) and responses mentioned above. Values [0000] through [0111] are defined for use as "ctype" (commands) Specifically, the value [0000] is defined as CONTROL, [0001] as STATUS, [0010] as INQUIRY, and [0011] as NOTIFY. Values [0100] through [0111] are currently undefined (reserved).

CONTROL is a command used to control functions externally; STATUS is a command for inquiring status from the outside; INQUIRY is a command utilized to inquire externally the presence or absence of support for control commands; and NOTIFY is a command employed to request that an external entity be notified of status change.

Values [1000] through [1111] are defined for use as responses. Specifically, the value [1000] is defined as NOT IMPLEMENTED; [1001] as ACCEPTED; [1010] as REJECTED; [1011] as IN TRANSITION; [1100] as IMPLEMENTED/STABLE; [1101] as CHANGED; [1110] as reserved; and [1111] as INTERIM.

The responses above are used selectively depending on the command type. For example, one of four responses NOT IMPLEMENTED, ACCEPTED, REJECTED and INTERIM is employed selectively depending on the status of the responder.

In Fig. 26, the ctype/response region is followed by a five-bit region that contains a subunit type. The subunit type designates a subunit (device) that serves as a destination of command transmission or as a source of response transmission. In the IEEE 1394 format, each device is called a unit and a functional unit within the unit is called a subunit. Illustratively, a typical VTR as a unit comprises two subunits: a tuner for receiving terrestrial and satellite broadcasts, and a video cassette recorder/player.

Subunit types are defined illustratively as shown in Fig. 28A. Specifically, a value [00000] is defined as a monitor while [00001] through [00010] are reserved. A value [00011] is defined as a disc recorder/player, [00100] as a VCR, [00101] as a tuner, [00111] as a camera, and [01000] through [11110] are reserved. A value [11111] is defined as a unit for use where no subunit exists.

In Fig. 26, a three-bit region following the subunit type region contains an "id" (node_ID) for identifying a subunit if there exist a plurality of subunits of the same type.

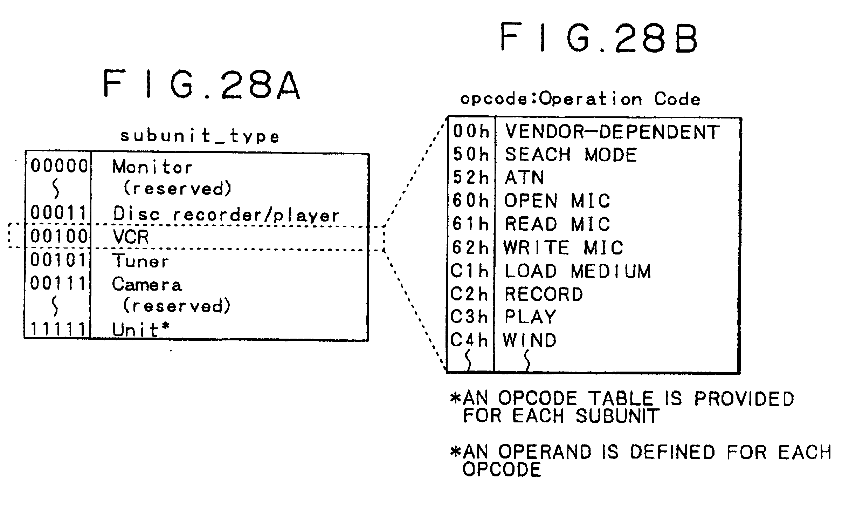

An eight-bit region following the "id" (node_ID) region contains an opcode which in turn is followed by an operand. The opcode stands for an operation code. The operand contains information (parameter) needed by the opcode. Opcodes are defined for each subunit in an opcode list table specific to the subunit in question. Illustratively, if the subunit is a VCR, diverse commands such as PLAY (playback) and RECORD (recording) are defined for the subunit as indicated in Fig. 28B. An operand is defined for each opcode.

A 32-bit region constituting the sixth quadlet in Fig. 26 is a mandatory data field. If necessary, operands may be added after this data field (shown as additional operands)

The data field is followed by a data_CRC region. Padding may be placed before the data_CRC region where necessary.

### 2-12. Plugs

Described below is general information about plugs in the IEEE 1394 format. As described above with reference to Figs. 24A and 24B, plugs represent, logical connections between devices in keeping with the IEEE 1394 format.

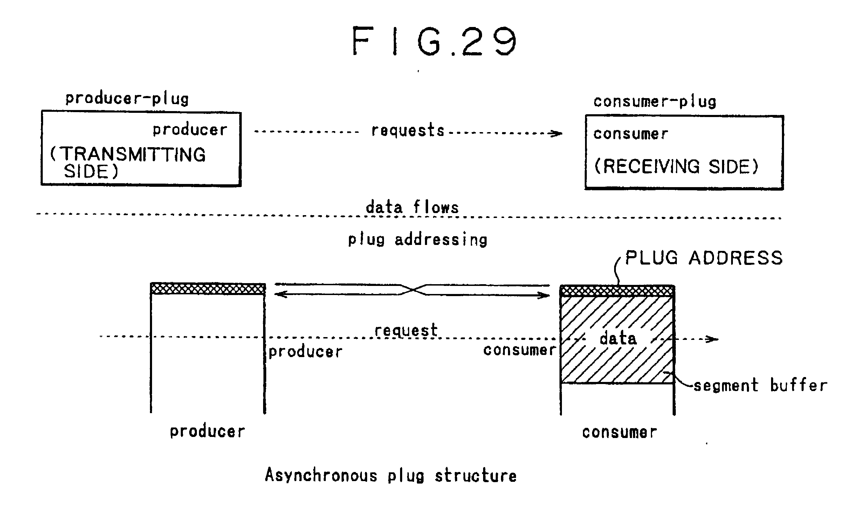

Data such as commands (requests) effective in asynchronous communication are sent from a producer to a consumer, as illustrated in Fig. 29. The producer stands for a device acting as a transmitter and the consumer denotes a device serving as a receiver in accordance with the IEEE 1394 interface. The consumer has a segment buffer, shown shaded in Fig. 29, which accommodates data written by the producer.

In the IEEE 1394 system, information for designating specific devices as the producer and consumer (the information is called connection management information) is retained at predetermined plug address locations indicated by braided lines in Fig. 29. The segment buffer is located following the plug address.

The range of segment buffer addresses to which the consumer may write data (the range thus denotes a recordable data quantity) is prescribed by a limit count register managed on the consumer side, as will be described later.

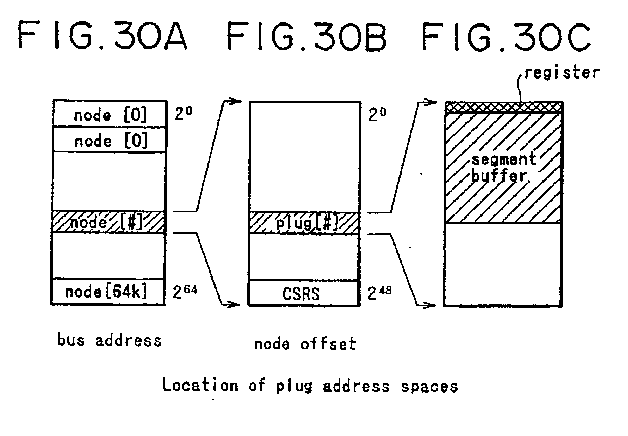

Figs. 30A, 30B and 30C depict a structure of plug address spaces for asynchronous communication. A 64-bit plug address space is divided as shown in Fig. 30A into as many as 216 (64K) nodes, in such a manner that a plug is found in the address space of each node as depicted in Fig. 30B. Each plug includes a register indicated by braided lines and a segment buffer shown shaded as illustrated in Fig. 30C. The register accommodates information (e.g., transmitted data size and receivable data size) necessary for exchanging data between the transmitting side (producer) and the receiving side (consumer), as will be explained later. The segment buffer is an area to which to write the data sent from the producer to the consumer. It is stipulated illustratively that a minimum segment buffer size is 64 bytes.

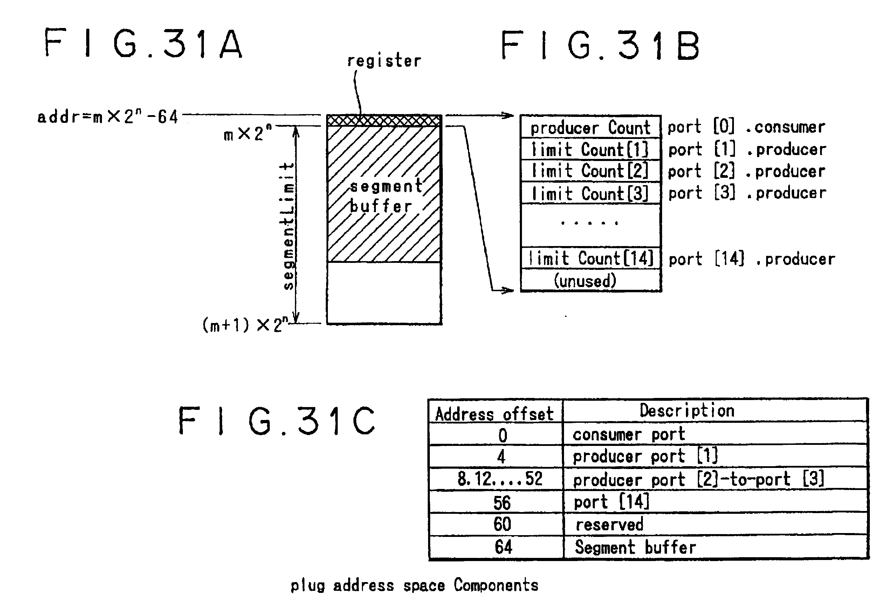

Fig. 31A shows a typical plug address whose content is the same as that in Fig. 30C. As shown in Fig. 31A, a plug address is headed by the register which is followed by the segment buffer.

An internal structure of the register, as indicated in Fig. 31B, is headed by a 32-bit producer count register followed by limit count registers [1] through [14] of 32 bits in size each. That is, one producer count register and 14 limit count registers make up the register. In this structure, an unused region comes behind the limit count register [14].

The plug structure illustrated in Figs. 31A and 31B is designated by offset addresses shown in Fig. 31C. Offset address 0 specifies a consumer port (producer count register) while offset addresses 4, 8, 12 through 56, and 60 designate producer ports [1] through [14]. Offset address 60, when defined as reserved, indicates an unused region. Offset address 60 is reserved, meaning a region unused and offset address 64 designates a segment buffer.

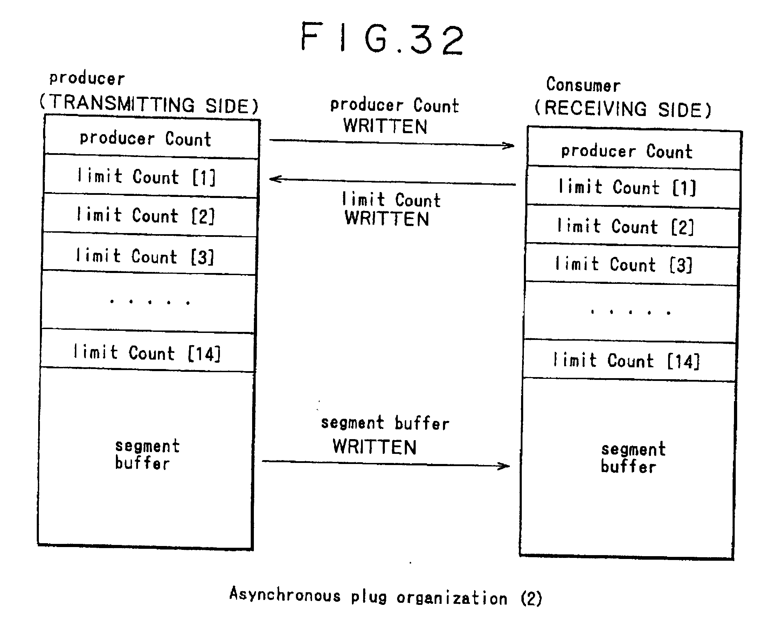

Figs. 32A and 32B shows plug structures for both the producer and the consumer. With such plug structures in effect, asynchronous communication is implemented by writing data to the producer count register, to the limit count registers and to the segment buffer in keeping with data exchange procedures which will be described later. The write operations come under the category of the write transaction described above.

The producer writes data to the producer count register of the consumer. More specifically, the producer first writes information about data transmission on the producer side to the producer count register at an address specific to the producer. The content of the producer count register is then written to the producer count register on the consumer side.

The producer count register accommodates the size of data to be written in a single write operation by the producer to the segment buffer of the consumer. That is, the producer that writes data to the producer count register performs a process of reporting the size of data to be written to the consumer segment buffer.

In response, the consumer writes data to the limit count registers of the producer. More specifically, the consumer first writes the size of its segment buffer to one of the limit count registers [1] through [14] (register [n]) which is designated corresponding to the producer. The content of the limit count register [n] is then written to the limit count register [n] of the producer.

In accordance with the data written to its limit count register [n], the producer determines the size of data to be written in a single write operation illustratively to its own segment buffer. The content of the segment buffer is in turn written to the segment buffer of the consumer. The write operation to the consumer segment buffer constitutes a data transmission of asynchronous communication.

### 2-13. Asynchronous Connection Transmission Procedures

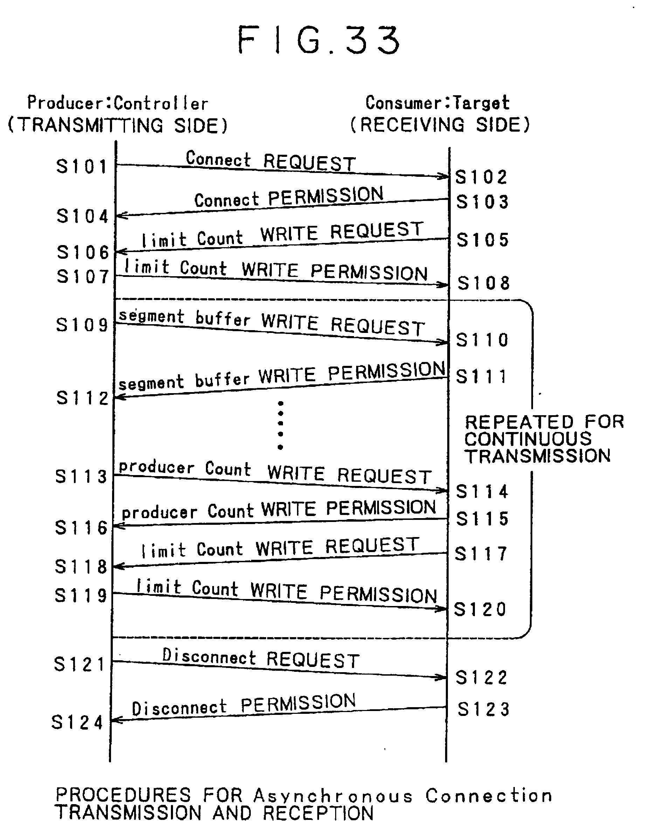

Described below with reference to a process transition diagram in Fig. 33 are basic procedures for transmission and reception by asynchronous connection where the inter-plug (i.e., producer-consumer) structure of Figs. 32A and 32B is assumed to be established.

The transmission and reception procedures shown in Fig. 33 are implemented using AV/C commands (write request packets) in an environment stipulated by the FCP for asynchronous communication. Auxiliary data handled by this embodiment are transmitted and received by use of the procedures within the IEEE 1394 system. It should be noted that the processing shown in Figs. 32A and 32B indicates only communicating operations by means of asynchronous connection; a communication process addressing the recording and playback of auxiliary data will be described later.

In an actual asynchronous connection setup, acknowledgements are sent and received following command transmissions as shown in Fig. 25. The setup of Fig. 33 omits illustration of acknowledgement exchanges for purpose of simplification.

For the IEEE 1394 interface, inter-plug (i.e., device-to-device) connective relations include controller-target relations in addition to the above-described producer-consumer relations. In the IEEE 1394 system, the devices established in producer-consumer relations may or may not coincide with the devices that are arranged in controller-target relations. In other words, there may exist a device stipulated to offer controller functions in addition to the devices designated as producers. In this example, however, it is assumed that the producer-consumer relations coincide with the controller-target relations.

In step S101 in the transmission procedures of Fig. 33, a producer transmits a connect request to a consumer. The connect request is a command sent by the producer to the consumer for requesting a connection therebetween. The command informs the consumer of a register address of the producer.

The connect request is received by the consumer in step S102, whereupon the consumer recognizes the address of the register on the producer side. In step S103, the consumer transmits in response a connect permission to the producer. Upon receipt of the connect permission by the producer in step S104, a connection is established between the producer and the consumer for subsequent data transmission and reception thereby.

With the connection set up as described above, the consumer transmits a limit count register (abbreviated to the limit count hereunder) write request to the producer in step S105. After receiving the limit count write request in step S106, the producer transmits a limit count write permission to the consumer in step S107. In step S108, the consumer receives the limit count write permission. The sending of the limit count write request followed by the write permission is a process that determines the size of data to be written later to the segment buffer (i.e., segment buffer size).

In step S109, the producer transmits a segment buffer write request to the consumer. The segment buffer write request is received by the consumer in step S110. In response, the consumer transmits a segment buffer write permission to the producer in step S111. The producer receives the segment buffer write permission in step S112.

Carrying out steps S109 through S112 completes a single process of writing data from the segment buffer of the producer to the segment buffer of the consumer.

In steps S109 through S112, the data are written by transmission of a single asynchronous packet shown in Fig. 19. If the data size transferred in an asynchronous packet is less than the data size designated by the limit count register and if the transmission of the necessary data is not complete using the single asynchronous packet, then steps S109 through S112 are repeated until the segment buffer capacity is fully taken up.

When the write operation to the segment buffer is completed in steps S109 through S112, step S113 is carried out in which the producer transmits a producer count register (abbreviated to the producer count hereunder) write request to the consumer. The consumer receives the producer count write request in step S114 and performs a write operation to its producer count register. In step S115, the consumer transmits a producer count write permission to the producer. The producer receives the producer count write permission in step S116.

The process above notifies the consumer of the data size transferred in steps S109 through S112 from the producer to the consumer segment buffer.

In step S117, a process is initiated to perform a limit count write operation following the producer count write process made up of steps S113 through S116. Specifically, as shown in steps S117 through S120, a limit count write request is transmitted from the consumer to the producer. In response, the producer transmits a limit count write permission to the consumer.

Steps S109 through S120 above constitute a single set of procedures for data transmission by asynchronous connection. If the size of data to be transmitted is greater than the segment buffer size and if the transmission of the data is not complete in the single series of steps S109 through S120, then steps S109 through S120 are repeated until the data transmission is completed.

When the data transmission is completed, the producer in step S121 transmits a disconnect request to the consumer. The consumer receives the disconnect request in step S122, and transmits a disconnect permission in step S123. The producer receives the disconnect permission in step S124, which completes the data transmission and reception by asynchronous connection.

### 3. Editing by Erasure According to the Invention

### 3-1. Operating Steps

As described above, the MD recorder/player 1 of this embodiment allows contents of the U-TOC to be updated. This permits various kinds of editing of recorded tracks on the disc.

The AV system (see Fig. 2) of this embodiment may be arranged to let the personal computer 113 carry out various editing, recording and playback operations. This amounts to remote control over the MD recorder/player 1 through an IEEE 1394 data interface.

These features are implemented by installing suitable application software in the personal computer 113 for operating and controlling the MD recorder/player 1 as required. The application software may be operated illustratively on a GUI basis.

Commands are generated in response to GUI-based operations of the application software. The commands are sent in the IEEE 1394 format to the MD recorder/player 1 over the IEEE 1394 bus 116. Upon receipt of such commands, the system controller 11 of the MD recorder/player 1 performs various control processes correspondingly. For example, if the user carries out a playback operation through the GUI of the application software, the CPU of the personal computer 113 generates a PLAY command accordingly and transmits the command to the MD recorder/player 1. Given the command, the MD recorder/player 1 (system controller 11) executes a control process to start playing back the disc. This is how remote control is implemented in the inventive setup.

With this embodiment, one form of such remote control involves erasing a plurality of tracks all at once.

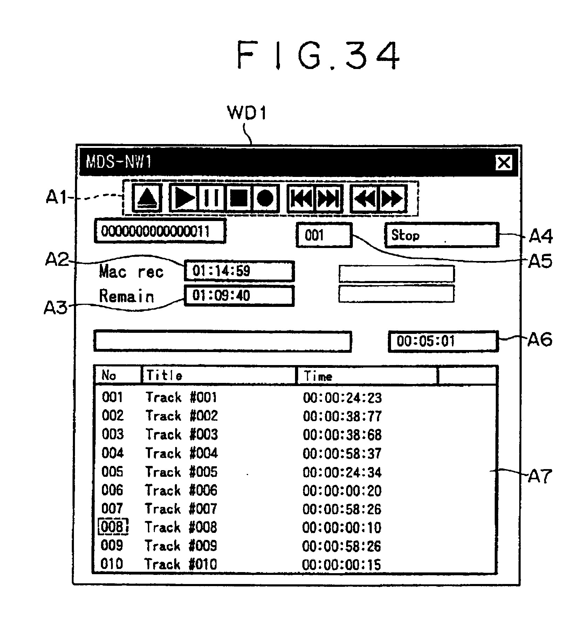

How to erase multiple tracks simultaneously will now be described by referring to Figs. 34 through 36.

The suitable application software is first started in the personal computer 113. In accordance with the application program thus started, the CPU 201 of the computer 113 requests transmission of tables of contents (U-TOC, P-TOC) from the MD recorder/player 1. The TOCs sent from the MD recorder/player 1 are placed illustratively into the RAM 203. By referencing the TOCs in the RAM 203, the CPU 201 causes an MD control window WD1, shown in Fig. 34, to appear on the display monitor 208.

In the top portion of the MD control window WD1, an operation key area A1 is displayed illustratively. The area A1 includes a number of operation keys for executing such remote operations as playback, recording, fast forward, rewind, automatic music search, and disc ejection on the MD recorder/player 1.

Immediately below the MD control window WD1 toward the left is a maximum recordable time area A2. The area A2 indicates a maximum recordable time of the currently loaded disc. Under the maximum recording time area A2 is a remaining recordable time area A3 that indicates the remaining recordable time available on the disc.

Immediately below the MD control window WD1 toward the right is a selected track area A4 showing the currently selected track. To the left of the area A4 is a mode display area A5 that indicates the current recording or playback status. Under the areas A4 and A5 is an elapsed time area A6 showing the elapsed time of playback or recording on the currently selected track.

The approximately lower half of the MD control window WD1 is occupied by a track list area A7. The area A7 lists the tracks recorded on the disc.

A "No" column of the track list area A7 indicates track numbers. The example of Fig. 34 shows 10 tracks recorded (track numbers 001 through 010).

A "Title" column of the track list area A7 shows track names given to the recorded tracks. The track names constitute the contents to be displayed in accordance with information controlled by use of U-TOC sector 4, as discussed in connection with Fig. 12.

Although the user may in practice enter desired characters to name the tracks, this example is shown having track names Track #001 through Track #010 entered corresponding to the track numbers for purpose of simplification and illustration.

A "Time" column indicates a total playing time of each of the recorded tracks.

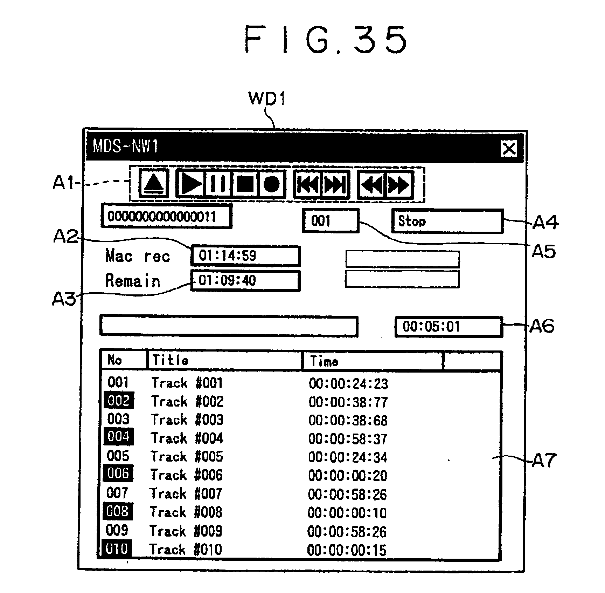

In the display state of Fig. 34, suppose that the user wants to erase five tracks having track numbers "002," "004," "006," "008" and "010." In that case, the user may illustratively click on a mouse to select the track number "002" to display it in reverse video. The user may proceed likewise to click on the track numbers "004," "006," "008" and "010" to select and display them in reverse video. Eventually, the MD control window WD1 is changed from the display state of Fig. 34 to that of Fig. 35.

With the track numbers "002," "004," "006," "008" and "010" selected as shown in Fig. 35, the user may perform a menu bar operation or like action to effect the track erasure.

In response, the CPU 201 of the personal computer 113 causes the MD recorder/player 1 to execute an editing process erasing the track numbers "002," "004," "006," "008" and "010." This editing process will be described later in more detail.

At the same time, the contents of the U-TOC held in the RAM 203 are updated by the CPU 201 of the personal computer 113 stipulating that the track numbers "002," "004," "006," "008" and "010" are erased. The update is carried out to ensure consistency with the TOC of the MD recorder/player 1.

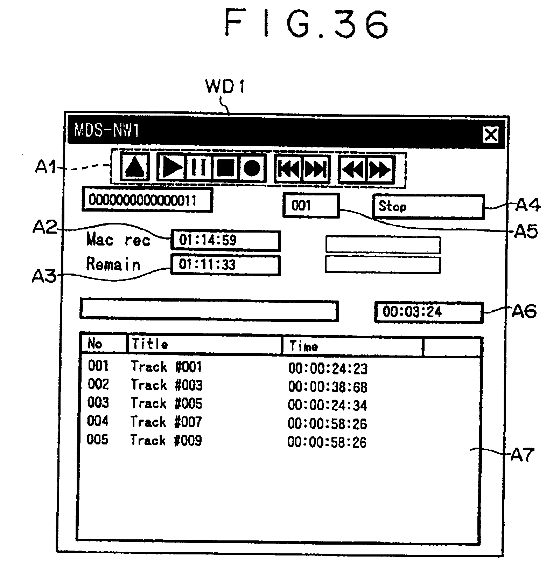

The contents of the U-TOC updated to reflect the collective erasure of the selected tracks appear in the MD control window WD1 as shown in Fig. 36. Specifically, as indicated in the track list area A7 of Fig. 36, the track numbers "002" (track name: Track #002), "004" (track name: Track #004), "006" (track name: Track #006), "008" (track name: Track #008) and "010" (track name: Track #010) are erased from the track list.

The remaining five tracks with track names Track #001, Track #003, Track #005, Track #007 and Track #009 are then assigned track numbers 001, 002, 003, 004 and 005 respectively, as shown, in a new state of control.

### 3-2. MULTIPLE ERASE Command

The above-described editing operations to erase a plurality of tracks collectively by the personal computer 113 must be matched with an actual process of collective track erasure on the side of the MD recorder/player 1. Since the personal computer 113 and MD recorder/player 1 constitute a system connected by the IEEE 1394 bus 116, the actual erasure process needs to be triggered by the computer issuing an IEEE 1394 interface-based API command designating collective erasure of the multiple tracks.

This embodiment has a MULTIPLE ERASE command defined so as to request collective erasure of a plurality of tracks according to the IEEE 1394 interface criteria. This command is one of vendor dependent commands allowed to be additionally defined and provided by vendors according to the IEEE 1394 API.

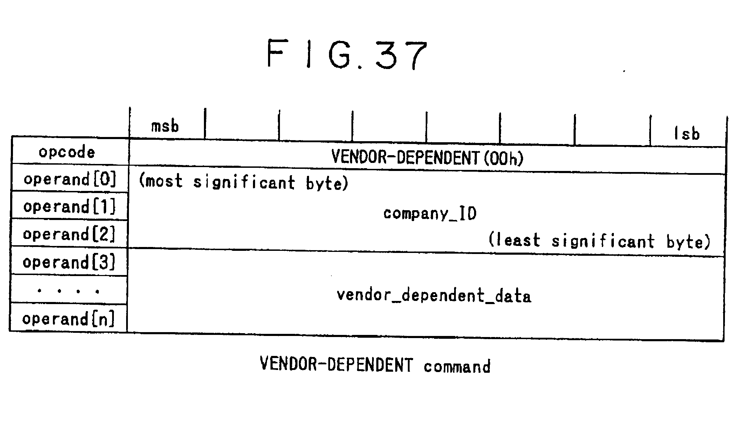

Fig. 37 shows a data structure of a VENDOR DEPENDENT command. This structure is placed following the opcode in the data field of the write request packet (AV/C command packet) depicted in Fig. 26.

A value "00h" is set to the eight-bit opcode region. The value identifies a vendor dependent command.

A three-byte region made up of operands [0] through [2] accommodates a company ID unique to each vendor.

Operands [3] through [n] following the three-byte region of operands [0] through [2] hold vendor dependent data designating the contents of the VENDOR DEPENDENT command in question.

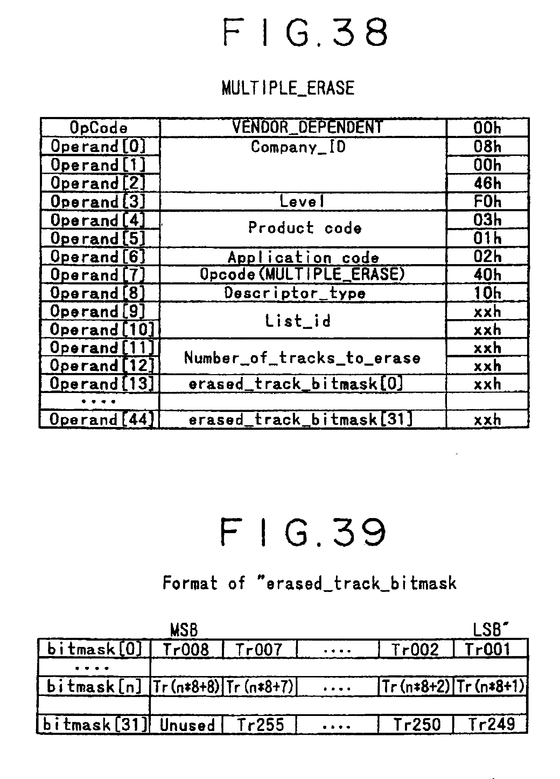

Fig. 38 depicts typical contents of the MULTIPLE ERASE command provided as a VENDOR DEPENDENT command.

The opcode region holds a value "00h" identifying a VENDOR DEPENDENT command. The company ID region made of the operands [0] through [2] accommodates values "08h," "00h" and "46h" corresponding to the operands [0] through [2] respectively to identify a specific vendor (manufacturer). A four-byte region made up of operands (3] through [6] retains values prescribed for operative expediency on the part of the vendor identified by the company ID. Specifically, a value "F0h" (level) is set to the operand [3]; values "03h" and "01h" (product code) are set to the operands [4] and [5] respectively; and a value "02h" (application code) is set to the operand [6]

Regions made up of an operand [7] and subsequent operands hold specific data constituting the MULTIPLE ERASE command.

In this example, the operand [7] holds a value "40h" identifying this VENDOR DEPENDENT command as the MULTIPLE ERASE command.

An operand [8] following the operand [7] holds a value "10h" as a descriptor type. The ensuing operands [9] and [10] make up a list ID region. Illustratively, the region retains a list ID of the TOC managed as a list by the personal computer 113.

Operands [11] and [12] constitute a region called "Number of tracks to erase." As its name implies, this region indicates the number of tracks designated to be erased.

Operands [13] through [44] that follow are regions defined as erased track bitmasks [0] through [31] respectively. These regions illustratively have a structure shown in Fig. 39.

As shown in Fig. 39, the erased track bitmask [0] is an eight-bit region whose bits ranging from the LSB (bit 8) to the MSB (bit 1) correspond to track numbers Tr001 through Tr008 respectively.

The erased track bitmask [n] subsequent to the bitmask [0] has bits which, ranging from the LSB to the MSB, correspond to track numbers Tr(n * 8 + 1) through Tr(n * 8 + 8) respectively. That is, the erased track bitmasks [0], [1], etc., each correspond to eight tracks with their track numbers arranged in ascending order.

Of the eight bits constituting the last erased track bitmask [31], the LSB (bit 8) through bit 2 correspond to track numbers Tr249 through Tr255; the MSB (bit 1) is not used. That is, the erased track bitmasks [0] through [31] are arranged so as to correspond to track numbers Tr001 through Tr251.

The reason the erased track bitmasks are keyed to the track numbers Tr001 through Tr251 is that the mini-disc format allows up to 255 tracks to be managed.

In each of the erased track bitmasks [0] through [31], "1" is set to each bit location corresponding to a track number designated for erasure. In other words, "0" is set for every track number not specified for erasure.

If track numbers Tr1, Tr5, Tr8 and Tr14 are illustratively selected to designate these four tracks to be erased, then the MULTIPLE ERASE command has its operand [9] and subsequent regions defined as follows:

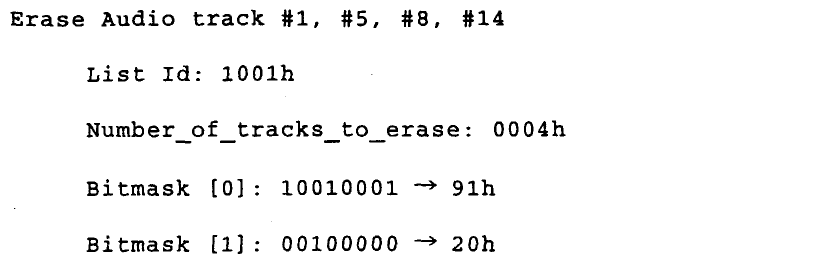

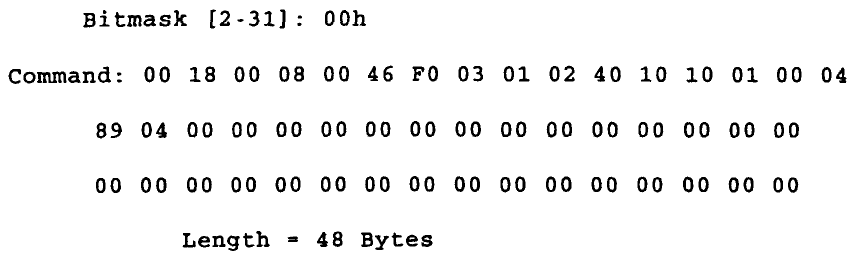

### 3-3. Processes

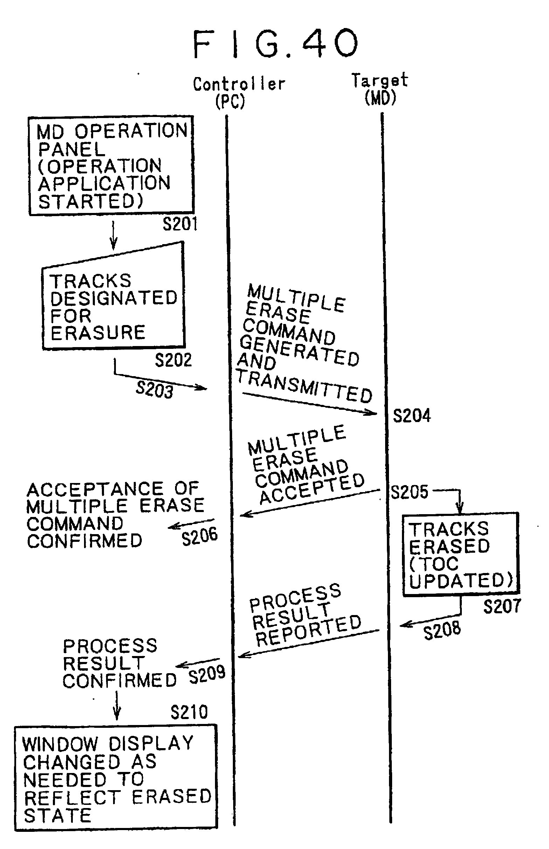

Typical processing steps to erase multiple tracks all at once are shown in a process transition diagram of Fig. 40. For the processing of Fig. 40, it is assumed that the personal computer 113 functions as a controller executing remote control over the MD recorder/player 1 acting as a target. It is also assumed that the steps in Fig. 40 are carried out by the CPU 203 of the personal computer 113 as well as by the system controller 11 of the MD recorder/player 1 as needed. In the description that follows, the CPU 203 of the personal computer 113 will be referred to as the controller and the system controller 11 of the MD recorder/player 1 as the target.

In step S201 of Fig. 40, the controller starts up an MD operation panel (for operative application software). With the MD operation panel started, the MD control window WD1 of Fig. 34 appears on the screen.

In step S202, the tracks to be erased are designated in response to the user's GUI operations in the MD control window WD1. as described above in connection with Figs. 34 and 35. When the user completes the operations to execute the track erasure, step S203 is reached.

In step S203, the tracks designated to be erased in step S202 are set in a MULTIPLE ERASE command. This command is generated so as to reflect the contents of the erased track bitmasks, and is transmitted to the target (MD recorder/player 1).

In step S204, the target receives the MULTIPLE ERASE command from the controller. In step S205, the target issues a response notifying the controller of the acceptance of the MULTIPLE ERASE command.

Given the response from the target, the controller confirms that its MULTIPLE ERASE command has been accepted by the target. If necessary, the target could issue a response in step S205 notifying the controller of the rejection for some reason of the MULTIPLE ERASE command.

Having accepted the MULTIPLE ERASE command, the MD recorder/player 1 acting as the target updates the U-TOC in step S207 in order to erase the tracks designated by the command. With the U-TOC update completed in step S207, the target notifies the controller of the result of the processing. That is, if the U-TOC update is normally completed, the target issues a process result notice notifying the controller of the normal process end.

In step S209, the controller receives the process result notice issued by the target in step S208. Given the notice, the controller confirms the result of the processing before reaching step S210.

In step S210, the controller changes indications in the MD control window WD1 to reflect the result of the erasure. Illustratively, the display of Fig. 35 is replaced by that of Fig. 36 to show that the designated tracks have been erased.

Although the description above contains many specificities, these should not be construed as limiting the scope of the invention but as merely providing illustrations of some of the presently preferred examples of this invention. For example, the MD control window WD1 (GUI control screen) may be modified as desired for optimum usability. The steps and operations to select multiple tracks to be erased may be different from those described above. The procedure involved need only be such as to provide a user interface allowing a plurality of tracks to be designated for collective erasure.

The device on which to perform multiple track erasure is not limited to the MD recorder/player discussed above. Any other drive device may be used alternatively as long as it is compatible with storage media having management information for recording and playback in increments of programs.

The device to control multiple track erasure is not limited to the personal computer. Alternatively, the IRD or other AV device may be arranged to incorporate suitable application software functions to provide remote control over the MD recorder/player 1.

Furthermore, the invention may be practiced solely in the form of an MD recorder/player comprising all necessary editing features. That is, the inventive MD recorder/player 1 may be designed to be operated alone to effect collective erasure of multiple tracks.

As described and according to the invention, there is provided an editing apparatus operated by a user to designate a plurality of programs (tracks) for collective erasure. The apparatus thereupon updates relevant management information to reflect such operations.

With the above structure, the user need only perform a single series of operations to designate multiple programs for collective erasure, whereas conventional devices required that a plurality of programs be erased by repeated operations, one program at a time. The inventive apparatus offers enhanced usability because multiple programs are erased in significantly fewer operating steps than before.

Whereas the operations to designate a plurality of programs for collective erasure are practiced as part of the functions of the editing apparatus, these operations may be implemented alternatively by a separately provided operation apparatus.

Such an operation apparatus, if furnished exclusively to carry out the operating functions, offers better usability than if an editing apparatus doubles as an operation device for designating multiple programs (tracks) to be erased collectively.

If the operation apparatus is practiced using a personal computer, the computer need only possess an appropriate data interface with an editing apparatus and have suitable application software installed to implement an operation panel feature with respect to the editing apparatus in use. When arranged as such, the personal computer readily serves as an operation apparatus offering a wealth of relevant operating functions.

As many apparently different embodiments of this invention may be made without departing from the spirit and scope thereof, it is to be understood that the invention is not limited to the specific embodiments thereof except as defined in the appended claims.

## Claims

1. An editing system constituted by a recording and reproducing apparatus which houses a storage medium having a plurality of programs stored thereon and by an editing apparatus connected to said recording and reproducing apparatus via a suitable interface in order to erase collectively multiple desired programs from said plurality of programs stored on said storage medium housed in said recording and reproducing apparatus, wherein said editing apparatus comprises:
receiving means for receiving via said suitable interface information about said plurality of programs stored on said storage medium housed in said recording and reproducing apparatus;
displaying means for displaying program-related information based on the information received by said receiving means regarding said plurality of programs stored on said storage medium housed in said recording and reproducing apparatus;
operating means for designating multiple programs desired to be erased from said plurality of programs on the basis of said program-related information displayed on said displaying means;
generating means for generating erasure information for collectively erasing the multiple desired programs designated by said operating means; and
transmitting means for transmitting said erasure information generated by said generating means to said recording and reproducing apparatus via said suitable interface; and
wherein said recording and reproducing apparatus comprises:
transmitting means for transmitting via said suitable interface the information about said plurality of programs stored on said storage medium housed in said recording and reproducing apparatus;
receiving means for receiving said erasure information transmitted from said editing apparatus via said suitable interface; and
editing means for erasing the multiple desired programs designated by said operating means of said editing apparatus for erasure from said plurality of programs stored on said storage medium on the basis of said erasure information received by said receiving means.

2. An editing system according to claim 1, wherein said suitable interface complies with IEEE 1394 criteria.

3. An editing system according to claim 1, wherein said erasure information is made up of the number of programs designated to be erased collectively, a command specifying collective erasure, and program numbers of the programs designated for collective erasure.

4. An editing system according to claim 1, wherein said storage medium includes a program area which stores programs and a management area which stores management information for managing the stored programs, and wherein said editing means edits said management area on said storage medium in order to erase collectively the designated programs.

5. An editing system according to claim 1, wherein, after the desired programs have been collectively erased by said editing means, the information about said plurality of programs stored on said storage medium housed in said recording and reproducing apparatus is retransmitted to said editing apparatus via said suitable interface.

6. An editing system according to claim 4, wherein the information about said plurality of programs stored on said storage medium housed in said recording and reproducing apparatus is generated on the basis of said management information stored in said management area of said storage medium.

7. An editing apparatus which is connected via a suitable interface to a recording and reproducing apparatus housing a storage medium having a plurality of programs stored thereon and which erases collectively multiple desired programs from said plurality of programs stored on said storage medium housed in said recording and reproducing apparatus, said editing apparatus comprising:
receiving means for receiving via said suitable interface information about said plurality of programs stored on said storage medium housed in said recording and reproducing apparatus;
displaying means for displaying program-related information based on the information received by said receiving means regarding said plurality of programs stored on said storage medium housed in said recording and reproducing apparatus;
operating means for designating multiple programs desired to be erased from said plurality of programs on the basis of said program-related information displayed on said displaying means;
generating means for generating erasure information for collectively erasing the multiple desired programs designated by said operating means; and
transmitting means for transmitting said erasure information generated by said generating means to said recording and reproducing apparatus via said suitable interface.

8. An editing apparatus according to claim 7, wherein said suitable interface complies with IEEE 1394 criteria.

9. An editing apparatus according to claim 7, wherein said erasure information is made up of the number of programs designated to be erased collectively, a command specifying collective erasure, and program numbers of the programs designated for collective erasure.

10. An editing apparatus according to claim 7, wherein said storage medium includes a program area which stores programs and a management area which stores management information for managing the stored programs, and wherein said editing means edits said management area on said storage medium in order to erase collectively the designated programs.

11. An editing apparatus according to claim 10, wherein the information about said plurality of programs stored on said storage medium housed in said recording and reproducing apparatus is generated on the basis of said management information stored in said management area of said storage medium.

12. An editing method for use with an editing system constituted by a recording and reproducing apparatus which houses a storage medium having a plurality of programs stored thereon and by an editing apparatus connected to said recording and reproducing apparatus via a suitable interface, wherein said editing method comprises the steps of:
receiving information about said plurality of programs stored on said storage medium housed in said recording and reproducing apparatus;
displaying program-related information based on the received information regarding said plurality of programs stored on said storage medium housed in said recording and reproducing apparatus;
designating multiple programs desired to be erased from said plurality of programs on the basis of the displayed program-related information;
generating erasure information for collectively erasing the multiple desired programs designated;
transmitting the generated erasure information to said recording and reproducing apparatus via said suitable interface; and
after collective erasure of the desired programs on the side of said recording and reproducing apparatus, again receiving via said suitable interface the information about said plurality of programs stored on said storage medium.

13. An editing method according to claim 12, wherein said suitable interface complies with IEEE 1394 criteria.

14. An editing method according to claim 12, wherein said erasure information is made up of the number of programs designated to be erased collectively, a command specifying collective erasure, and program numbers of the programs designated for collective erasure.

15. An editing method according to claim 12, wherein said storage medium includes a program area which stores programs and a management area which stores management information for managing the stored programs, and wherein said management area on said storage medium is edited in such a manner as to erase collectively the designated programs.

16. An editing method according to claim 15, wherein the information about said plurality of programs stored on said storage medium housed in said recording and reproducing apparatus is generated on the basis of said management information stored in said management area of said storage medium.
